Europäisches Patentamt

European Patent Office

Office européen des brevets

(19)

(11)  EP 0 679 510 B1

(12) **EUROPÄISCHE PATENTSCHRIFT**

(45) Veröffentlichungstag und Bekanntmachung des Hinweises auf die Patenterteilung:
   **19.03.1997  Patentblatt 1997/12**

(51) Int. Cl.⁶: **B41C 1/14**, G01B 11/24

(21) Anmeldenummer: **94106498.2**

(22) Anmeldetag: **26.04.1994**

(54) **Verfahren und Vorrichtung zur Herstellung einer Siebdruckschablone**

Method and device for fabricating a screener

Procédé et dispositif de fabrication d'un écran pour sérigraphie

(84) Benannte Vertragsstaaten:
   **AT DE ES FR GB IT NL**
   Benannte Erstreckungsstaaten:
   **SI**

(43) Veröffentlichungstag der Anmeldung:
   **02.11.1995  Patentblatt 1995/44**

(73) Patentinhaber: **Schablonentechnik Kufstein Aktiengesellschaft**
   **A-6330 Kufstein (AT)**

(72) Erfinder:
   • **Rückl, Siegfried**
     **A-6322 Langkampfen (AT)**
   • **Kapfinger, Harald, Ing.**
     **A-6322 Kirchbichl (AT)**

(74) Vertreter: **TER MEER - MÜLLER - STEINMEISTER & PARTNER**
   **Mauerkircherstrasse 45**
   **81679 München (DE)**

(56) Entgegenhaltungen:
   **EP-A- 0 347 010          DE-A- 3 601 327**

   • **MEASUREMENT TECHNIQUES, Band 24, Nr. 8, August 1981, New York, US, Seiten 630-633; A.E. ISAKOV et al.: 'Accuracy estimation in checking cylindrical surfaces with**
   • **MEASUREMENT TECHNIQUES, Band 33, Nr. 11, November 1990, New York, US, XP000259779, Seiten 1104-1108; Y.S. SYSOEV et al.: 'Method of measuring deviations from the**

**Beschreibung**

Die Erfindung betrifft ein Verfahren zur Herstellung einer Siebdruckschablone gemäß dem Oberbegriff des Patentanspruchs 1 sowie eine Vorrichtung zur Herstellung der Siebdruckschablone gemäß dem Oberbegriff des Patentanspruchs 13.

Ein Verfahren und eine Vorrichtung der genannten Art sind bereits aus der EP-A-0 347 010 bekannt.

Diese Druckschrift beschreibt ein Verfahren zur Herstellung einer Siebdruckschablone, bei dem ein dünnwandiger Hohlzylinder, der außen eine Lackschicht tragt, bei Drehung um seine Zylinderachse mittels eines auf ihn auftreffenden Laserstrahls belichtet wird, dessen Fokus im Bereich der Lackschicht liegt, und der sich parallel zur Zylinderachse bewegt sowie in Übereinstimmung mit einem gewünschten Schablonenmuster ein- und ausgeschaltet wird, wobei an wenigstens einer zum Laserstrahl festen Meßposition eine radiale Abweichung der tatsachlichen Lage der Wand des Hohlzylinders von deren idealen Lage für eine Vielzahl von Umfangspositionen des Hohlzylinders berührungslos ermittelt wird.

Darüber hinaus beschreibt die genannte Druckschrift eine Vorrichtung zur Herstellung einer Siebdruckschablone mit einer Lagereinrichtung zur drehbaren Lagerung eines dünnwandigen Hohlzylinders, der außen eine Lackschicht tragt; einem parallel zur Zylinderachse des Hohlzylinders verschiebbaren Schlitten mit einer Ablenkoptik zur Ablenkung eines Laserstrahls auf die Lackschicht, in deren Bereich der Fokus des Laserstrahls zu liegen kommt; und einer Schalteinrichtung zum Ein- und Ausschalten des Laserstrahls in Übereinstimmung mit einem in einer Speichereinrichtung gespeicherten Schablonenmuster; wobei am Schlitten mindestens ein Sensor zur berührungslosen Messung einer radialen Abweichung der tatsächlichen Lage der Wand des Hohlzylinders von deren idealen Lage angebracht ist.

Der Erfindung liegt die Aufgabe zugrunde, das Verfahren und die Vorrichtung der eingangs genannten Art so weiterzubilden, daß das Schablonenmuster auf der Siebdruckschablone noch genauer hergestellt werden kann.

Die verfahrensseitige Lösung der gestellten Aufgabe ist im kennzeichnenden Teil des Patentanspruchs 1 angegeben. Dagegen findet sich die vorrichtungsseitige Lösung im kennzeichnenden Teil des Patentanspruchs 13.

Das Verfahren nach der Erfindung zeichnet sich dadurch aus, daß aus wenigstens einer der an der Meßposition erhaltenen radialen Lageabweichungen ein erstes Stellsignal gewonnen wird, um das Schablonenmuster zwecks Kompensation einer tangentialen Abweichung der Hohlzylinderwand von ihrer idealen Lage in Umfangsrichtung des Hohlzylinders zu verlagern.

Formabweichungen des Hohlzylinders, die entweder durch statische und/oder dynamische Einflüsse hervorgerufen werden, und die zu einer ungewünschten Verschiebung der Zylinderoberfläche relativ zum Laserstrahl führen können, lassen sich auf diese Weise ausgleichen, so daß das auf dem Hohlzylinder erzeugte Schablonenmuster noch exakter mit dem gewünschten und ggf. in einem elektronischen Speicher gespeicherten Schablonenmuster übereinstimmt.

Nach einer vorteilhaften Ausgestaltung des erfindungsgemäßen Verfahrens kann wenigstens aus der radialen Lageabweichung an der Meßposition ein zweites Stellsignal gewonnen werden, um den Fokus des Laserstrahls in Radialrichtung zu verstellen, nachdem sich der Hohlzylinder über einen dem Winkelabstand zwischen der Meßposition und dem Laserstrahl entsprechenden Umfangsabschnitt gedreht hat, um diese radiale Lageabweichung zu kompensieren.

Der Fokus des Laserstrahls kann durch diese Maßnahme also immer im Bereich der Lackschicht gehalten werden, selbst wenn sich die Zylinderoberfläche durch statische und/oder dynamische Einflüsse in Radialrichtung bewegen sollte, wodurch ebenfalls ein genaueres Schablonenmuster erhalten wird.

Dagegen zeichnet sich eine Vorrichtung nach der Erfindung dadurch aus, daß Verstellmittel vorhanden sind, die abhängig von der gemessenen Lageabweichung eine tangentiale Verschiebung des Schablonenmusters durchführen.

Die Erfindung wird nachfolgend unter Bezugnahme auf die Zeichnung im einzelnen beschrieben. Es zeigen:

**Figur 1** eine Darstellung zur Erläuterung von Formfehlern bei einer realen Siebdruckschablone;
**Figur 2** eine Darstellung zur Erläuterung von Abstandsänderungen bei einer kreiszylindrischen und exzentrisch zu einer Drehachse gelagerten Siebdruckschablone;
**Figur 3** eine Darstellung zur Erläuterung von Membranschwingungen und Schwingungsausschlägen bei einer kreiszylindrischen Siebdruckschablone;
**Figur 4** eine Darstellung zur Erläuterung von Teillängen der Siebdruckschablone;
**Figur 5** eine perspektivische Gesamtansicht einer erfindungsgemäßen Vorrichtung;
**Figur 6** einen Querschnitt im Bereich eines Optikschlittens der Vorrichtung nach Figur 5;
**Figur 7** einen Längsschnitt durch eine Siebdruckschablone;
**Figur 8** eine Seitenansicht eines Optikschlittens mit elektromechanischen Verstellmitteln;
**Figur 9** eine Draufsicht des Optikschlittens nach Figur 8;
**Figur 10** eine Seitenansicht eines weiteren Optikschlittens mit elektromechanischen Verstellmitteln;
**Figur 11** eine Draufsicht auf den Optikschlitten nach Figur 10; und
**Figur 12** eine Schaltungsanordnung, die als elektrische Verstelleinrichtung verstanden werden kann.

Bei der Gravur von kreiszylinderförmigen Siebdruckschablonen auf einer dafür bestimmten Maschine (= Gravursmaschine) ist ein genauer Rundlauf für das fehlerfreie Zusammenpassen der verschiedenen Farben, die mit einem Satz solcher Schablonen gedruckt werden, sehr wichtig. Abweichungen der Querschnitte der Schablone von der Kreisform und exzentrische Lagen des Mittelpunkts eines Querschnittkreises gegenüber der Drehachse der Gravurmaschine verursachen ungenau gravierte und in Umfangsrichtung verschobene Musterbilder auf dem Siebzylinder. Betrachtet man eine reale Rundschablone, das ist z. B. ein sehr dünnwandiger perforierter kreisförmiger Hohlzylinder, der üblicherweise einen Durchmesser von 200 bis 300 mm, eine Länge von 1000 bis 3000 mm und eine Wandstärke von 0,1 mm aufweit, so kann man feststellen, daß diese gegenüber der angestrebten kreiszylindrischen Gestalt Formabweichungen aufweist, die bis zu einigen Zehntel Millimeter betragen können. Natürlich kommt es bei der Ermittlung dieser Formabweichungen darauf an, wie der Hohlzylinder während der Messung eingespannt wird. Stellt man z. B. die Rundschablone mit einem ihrer Endquerschnitte auf den Boden, so können die Formabweichungen der realen Rundschablone gegenüber einem gleichgroßen idealen Kreiszylinder sogar bis zu einigen Millimetern anwachsen. Bei der obigen Angabe über die Formabweichungen wurde vorausgesetzt, daß die beiden Stirnseiten der Schablone von genau rundlaufenden Spannvorrichtungen festgehalten werden, z. B. auf genau rundlaufenden Innenspannzangen festgeklemmt werden, oder daß rundlauffehlerfreie konische Endstücke nach Art der Körnerspitzen einer Drehbank In die offenen Stirnseiten der Schablone eingreifen. Bei entsprechend genauer Ausführung dieser Spanneinrichtungen wird die dünne Rundschablone an ihren Enden einen ausreichend geringen Schlag aufweisen, jedoch gegen ihre Mitte zu aufgrund von inneren Spannungen immer stärkere Abweichungen von der Rundheit zeigen. Mißt man diese Abweichungen mittels eines berührungslosen Meßverfahrens z. B. induktiv oder optisch, so stellt man gegen die Mitte der Schablone die schon oben erwähnten Rundheitsabweichungen von einigen Zehntel Millimetern fest. Die Messung der Rundheitsabweichungen soll letztlich einen Ausgleich dieser Fehler durch geeignete technische Maßnahmen ermöglichen, so daß Gravurfehler vermieden werden. Die Meßeinrichtung wird hier als Sensor bezeichnet und soll mittels eines optischen oder induktiven, auf jeden Fall aber berührungslosen Verfahrens den senkrechten Abstand zwischen einem fest mit ihr verbundenen Bezugspunkt und der vorbeibewegten Schablonenwand feststellen.

Physikalische Größen des Umfelds der Schablone beeinflussen die Rundheitsabweichungen, wodurch diese Abweichungen entweder verstärkt oder vermindert werden. So wirkt z. B. ein wie auch immer auf die Innenseite der Schablone aufgebrachter Druck auf diese ausrundend, d. h. die Schablone wird durch die sich ausbildenden Membranspannungen besser der Form eines Kreiszylinders angenähert.

Zeitlich veränderliche, auf die Schablone einwirkende Kräfte regen diese zu Schwingungen an und können die Abweichungen verstärken. Solche Kräfte werden beispielsweise durch schlechte Drehantriebe freigesetzt. Diese den statischen Formfehlern überlagerten dynamischen Abweichungen der Hohlzylinderwand von der Rundheit können, wie Versuche gezeigt haben, ebenfalls durch einen auf die Innenseite der Schablone wirkenden Druck vermindert werden. Der Druck dämpft offensichtlich die Schwingungen der Schablone, hierauf wird später nochmals eingegangen. Allerdings ist er nicht zwingend erforderlich.

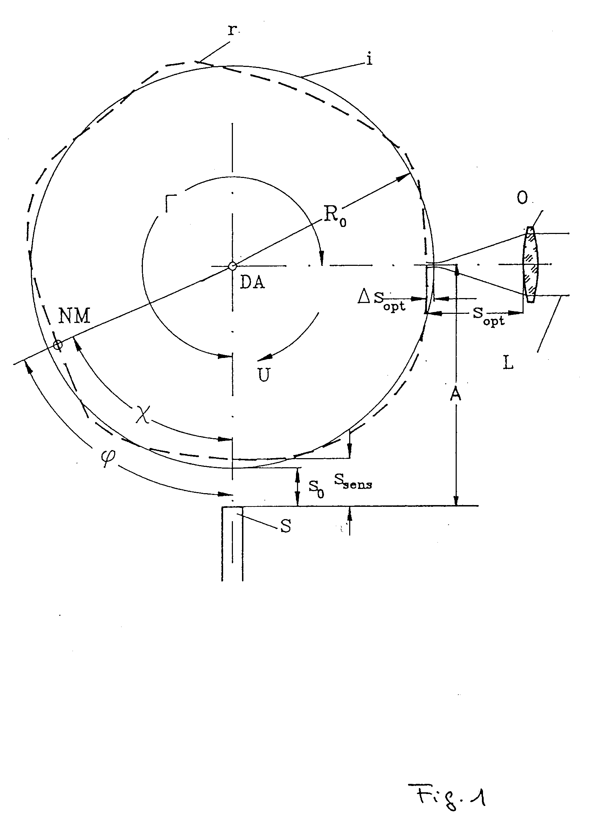

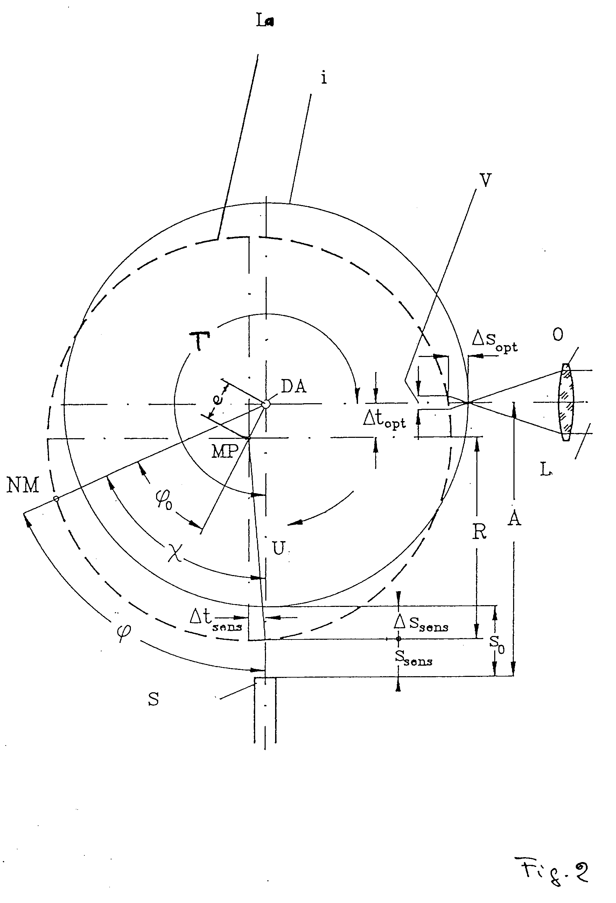

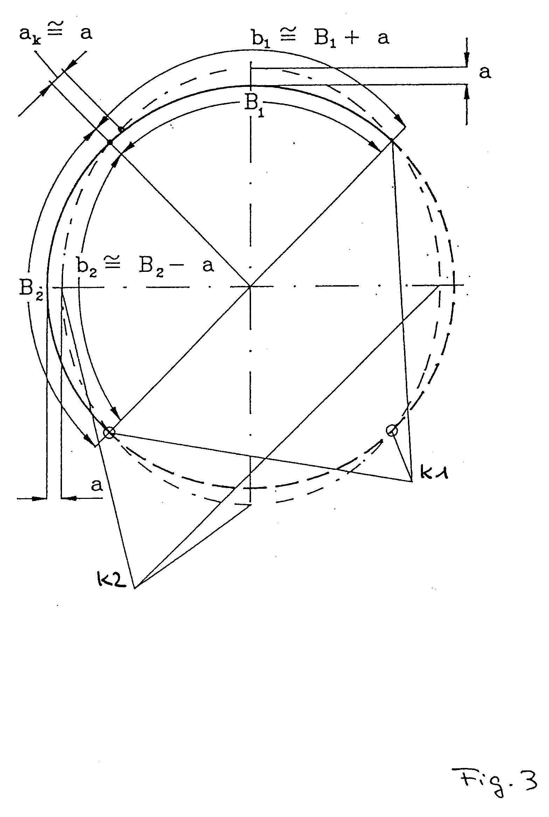

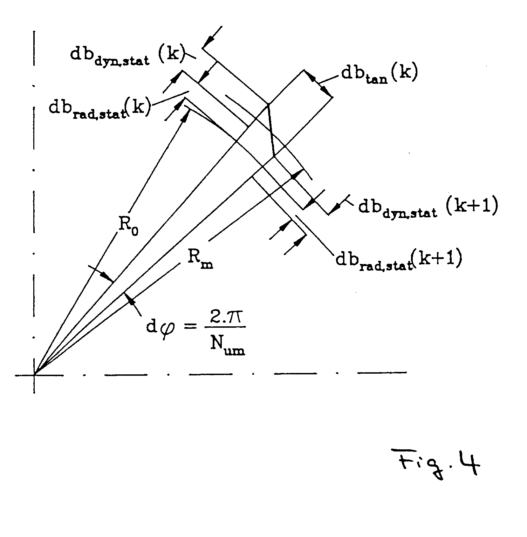

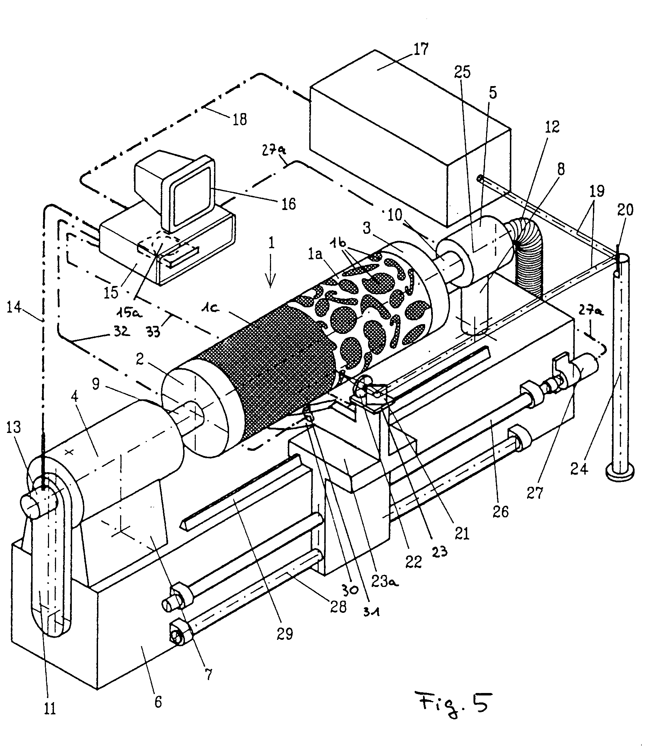

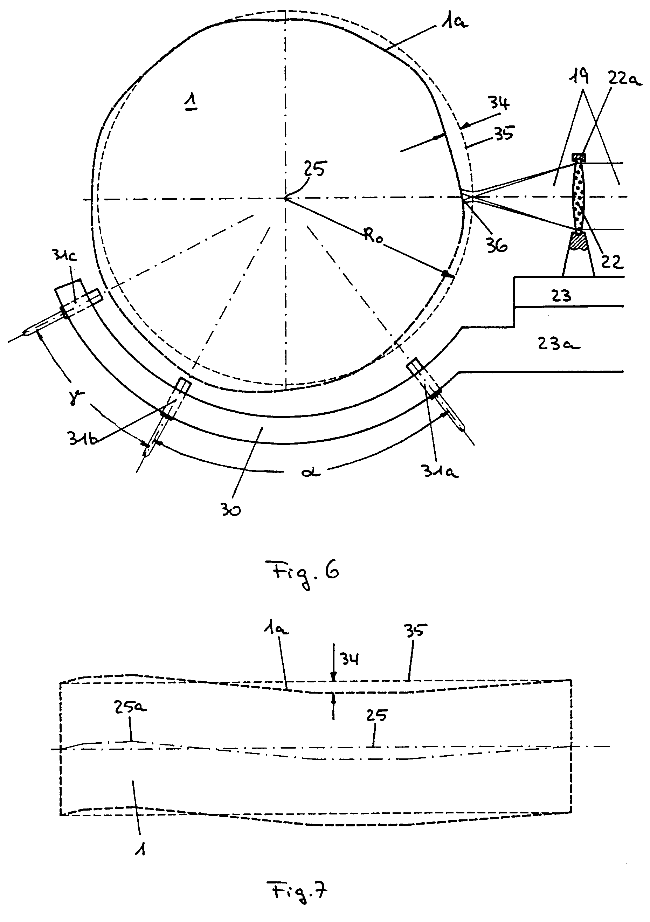

Zur geometrischen Beschreibung der Fehler ist es notwendig, geeignete Koordinaten bezüglich der Schablone und der Meßvorrichtung zu vereinbaren. Jede Schablone trägt irgendwo auf ihrem Umfang eine Nullmarke oder eine Passermarke, deren Lage zunächst zwar willkürlich festgelegt wird, die aber fest mit der Schablone verbunden bleibt. Das mit der Schablone ebenfalls fest verbundene Polarkoordinationssystem kann mittels dieser Marke folgendermaßen definiert werden, wie anhand von Figur 1 erläutert wird:

- Der Ursprung des K.S. liegt auf der Drehachse der Schablone.
- Die Radienrichtung steht normal zu dieser Achse.
- Der Winkel $\chi = 0$ ist durch die Verbindung mit der 0-Marke gegeben.
- Die Orientierung der Winkelkoordinate $\chi$ ist eine solche, daß die Werte für $\chi$ positiv zu zählen sind, wenn sie gegen die Drehrichtung der Schablone weisen.

Ferner sind in Figur 1:

- r = reale Schablone;
- i = ideale Schablone;
- DA = Drehachse;
- NM = Nullmarke;
- S = Sensor;
- $s_0$ = Abstand des Sensors zur idealen Schablone;
- $s_{sens}$ = Abstand des Sensors zur realen Schablone;
- U = Umlaufrichtung;
- L = Laserstrahl; und
- O = Fokussierungsoptik für den Laserstrahl.

Die Winkellage $\varphi$ der sich drehenden Schablone gegenüber dem Sensor wird zwischen diesem und der auf der Schablone angebrachten Nullmarke gemessen. Unter diesen Voraussetzungen gilt

$$\varphi = \chi. \tag{1}$$

Bei allen Gravurmaschinen ist zur Messung des Drehwinkels $\varphi$ ein Winkelimpulsgeber (Encoder) vorgesehen, der einen mit der Lage der Nullmarke übereinstimmenden Nullimpuls abgibt und außerdem den Winkel einer vollen Umdrehung (360 Grad = 2 $\pi$) in $N_{um}$ Impulse unterteilt. Der $N_{um}$-te Impuls der vorhergehenden Umdrehung wird deckungsgleich mit dem nullten Impuls der nachfolgenden Umdrehung abgegeben. Zur Umrechnung vom Drehwinkel $\varphi$ auf den k-ten Impuls und umgekehrt lassen sich die Relationen bilden

$$\varphi = \frac{k}{N_{um}} . 2.\pi \text{ oder } k = \frac{\varphi}{2.\pi} . N_{um} \tag{2}$$

bzw.

$$\varphi = \frac{k}{N_{um}} . 360 \text{ oder } k = \frac{\varphi}{360} . N_{um} \tag{3}$$

Da k nur ganzzahlig sein kann, ist es bei dieser Winkelmeßtechnik notwendig, sich auf diskrete aber durchaus feinstufige Winkelschritte für $\varphi$ zu beschränken.

Die Beschreibung des Fehlerbilds erfolgt am besten so, daß man die über eine Umdrehung der Schablone auftretenden Abweichungen des Radius der realen Schablone gegenüber einer Idealen Schablone, d. h. einer kreiszylindrischen und konzentrisch zur Drehachse gelagerten Schablone mit dem konstanten Radius $R_0$ in eine Fourier-Reihe entwickelt.

$$R(\chi) = R_0 + \sum_{i=1}^{m} a_i . \cos(i.\chi) + b_i . \sin(i.\chi) = R_0 + \sum_{i=1}^{m} c_i . \cos(i.\chi + \varepsilon_i) \tag{4}$$

Dies ist die Darstellung des Schablonenradius in dem definierten schablonenfesten Koordinatensystem. Der vom Sensor gemessene Abstand zu der sich drehenden realen Schablone ist dann $s(\chi) = A - R(\chi)$ und mit Verwendung der Winkellage $\varphi$ zwischen Nullmarke und Sensor wird wegen (1)

$$s_{sens}(\varphi) = \underbrace{A - R_0}_{s_0} - \sum_{i=1}^{m} [a_i . \cos(i.\varphi) + b_i . \sin(i.\varphi)] = A - R_0 - \sum_{i=1}^{m} c_i . \cos(i.\varphi + \varepsilon_i)$$

$$= s_0 - \sum_{i=1}^{m} c_i . \cos(i.\varphi + \varepsilon_i)$$

$$\tag{5}$$

In dieser Darstellung ist das Reihenglied nullter Ordnung $S_0$ der Abstand des Sensors von der idealen Schablone. Das Glied erster Ordnung $c_i$ entspricht einer einfachen Exzentrizität des Mittelpunkts des gerade vermessenen Querschnittkreises der Schablone. c1 kann auch bei einem genau kreiszylindrischen Querschnitt eine beträchtliche Größe haben. Betrachtet man einige in Längsrichtung aufeinanderfolgende Querschnitte der Schablone, dann entsprechen diejeweils für diese Querschnitte geltenden Glieder 1. Ordnung einer Abweichung der Längsachse der Schablone von einer Geraden und stellen somit eine Verbiegung dieser Langsachse dar. Zu bemerken ist, daß diese Verbiegung nicht durch einen Druck auf die Schabloneninnenseite vermindert werden kann. Das Reihenglied zweiter Ordnung entspricht einer Abweichung des Querschnitts im Sinne eines Ovals und kann bereits durch geringe Druckwirkungen auf die Schabloneninnenseite gegen Null geführt werden. Das Reihenglied dritter Ordnung entspricht einer Abweichung des Schablonenquerschnitts von der Rundheit im Sinne eines Dreiecks und kann ebenfalls durch einen Innendruck ausgeglichen werden. Ähnliches gilt für alle folgenden Abweichungen höherer Ordnung. Der Ausgleich der Rundheitsabweichungen erfordert jedoch einen desto höheren Innendruck, je höher die Fourierordnung der Abweichung ist. Es läßt sich zeigen, daß die Rundheitsabweichungen nur durch einen unendlich hohen Innendruck vollständig auf Null zurückgeführt werden können. Bei einem endlichen Innendruck verbleibt ein Restfehler, der proportional zur Amplitude $c_i$ des Fehlerreihenglieds ist, welches bei einer Schablone ohne Innendruck festgestellt werden kann.

<u>Messung und Verarbeitung des Rundlauffehlers bei einer durch Innendruck stabilisierten und ausgerundeten Schablone:</u>

Es wird jetzt vorausgesetzt, daß eine Rundschablone vorliegt, die durch einen auf ihre Innenseite wirkenden Druck weitgehend ausgerundet ist und wegen dieses Innendrucks auch nicht schwingt. Die Stabilisierung durch Innendruck kann man etwa folgendermaßen erklären. Schwingungen einer dünnen kreiszylindrischen Membran erfolgen so, daß die durch die Membran umrandete Querschnittsfläche dann genau kreisrund und daher ein Maximum ist, wenn der Momentanwert der Schwingungsausschläge gerade durch Null läuft. Jede durch eine Schwingung bedingte Abweichung verringert den Innenquerschnitt der Schablone, wodurch das im Inneren der Schablone befindliche Gas entweder komprimiert wird oder es wird dieses Gas durch eine geringe Drucksteigerung veranlaßt, schneller durch bereits offengelegte Bohrungen aus der Schablone zu strömen. Dem Schwingungsvorgang wird dadurch Energie entzogen, was bedeutet, daß Schwingungen der dünnen Membran durch das Gaspolster im Schabloneninnenraum bedämpft werden. Diese Aussage gilt aber nicht für Biegeschwingungen der Schablone, bei welchen die einzelnen Querschnitte der Schablone kreisförmig bleiben. Diesen Schwingungen wird durch die innere Materialdämpfung entgegengewirkt und darüber hinaus liegt zufolge des großen Flächenträgheitsmoments der Schablonenquerschnitte und der geringen Masse der Schablone die Frequenz der Biegeeigenschwingung von vornherein so hoch, daß ihre Schwingungsform kaum angeregt wird.

Bei einer Schablone, auf welcher ein Innendruck einwirkt, wird man als verbleibende Rundlauffehler nur noch jene feststellen, die durch die Verbiegung der Schablonenachse, d. h. die Exzentrizitäten der einzelnen Querschnitte der Schablone, bedingt sind. Diese Schlagfehler verursachen beim Gravieren der realen Schablone geometrische Fehler in dem erzeugten Musterbild, das heißt Abweichungen der Lage und der Form des Musterbilds gegenüber einem solchen, welches auf einer idealen, schlagfrei laufenden und genau kreiszylindrischen Schablone graviert würde. Diese geometrischen Fehler bestehen erstens aus einer Verschiebung der Lage des Gravurbilds in Umfangsrichtung und zweitens aus einer Breitenänderung der erzeugten Gravurlinien. Letztere werden durch radiale Abstandsänderungen der Schablonenwand gegenüber der den Laserstrahl fokussierenden Optik verursacht.

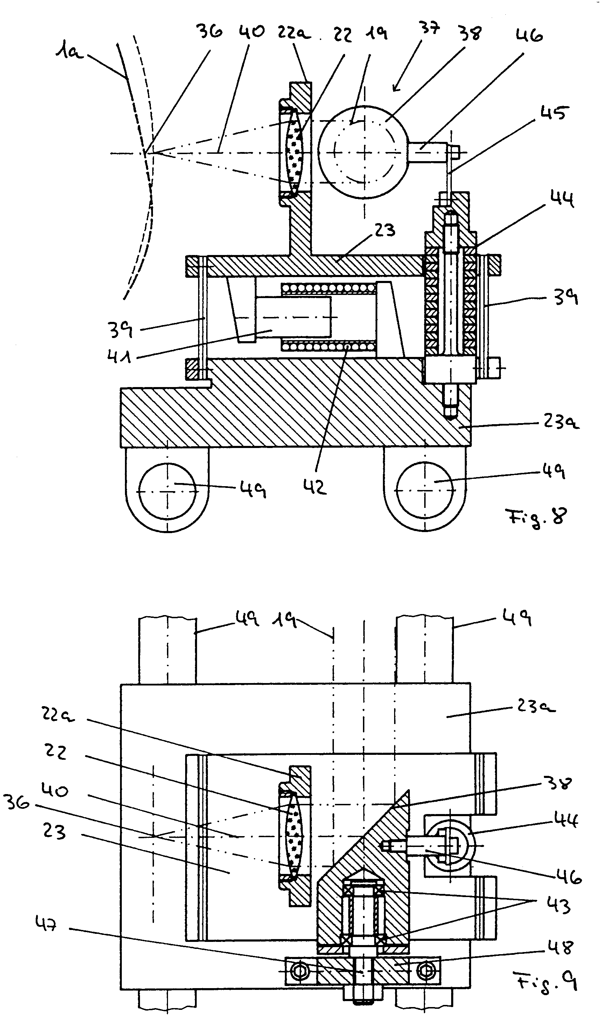

In Figur 2 bedeuten:

- La= Lage der wirklichen Schablone exzentrisch zur Drehachse;
- i = ideale Lage der Schablone konzentrisch zur Drehachse;
- DA = Drehachse;
- MP = Mittelpunkt der wirklichen Schablone;
- V = Verbreiterung des Fokusdurchmessers zufolge $\Delta s_{opt}$;
- O = Optik;
- L = Laserstrahl;
- U = Umlaufrichtung; und
- S = Sensor.

Unter Zugrundelegung der Bezeichnungen der Figur 2 folgt aus Gleichung (5) für die Abstandsänderung der Schablonenwand der realen Schablone gegenüber der idealen Schablone am Ort des Sensors

$$\Delta s_{sens} = s_0 - s_{sens}(\varphi) = c_1 \cdot \cos(\varphi - \varepsilon_1) \tag{6}$$

$\Delta s_{sens}$ kann, wie man aus (6) erkennt, auch negative Werte annehmen. Hat sich die Schablone gegenüber der in Abbildung 1 gezeigten Momentanlage um den Winkel $\Gamma$ weitergedreht, dann ist dies auch die Änderung, die der Optik aufgeprägt werden muß, damit der Abstand zwischen letzterer und der Schablone konstant bleibt und keine Tiefenschärfefehler entstehen können. Aus einer unmittelbaren geometrischen Überlegung anhand der Abbildung 1 folgt die radiale Abstandsänderung zu

$$\Delta s_{sens} = e \cdot \cos(\varphi - \varepsilon_1) \tag{7}$$

Für die Verlagerung der Wandung der wirklichen Schablone in Umfangsrichtung gegenüber der idealen Schablonen erhält man

$$\Delta t_{sens} = e \cdot \sin(\varphi - \varepsilon_1) \tag{8}$$

Man erkennt aus einem Vergleich mit (6), daß die Exzentrizitäte der Amplitude $c_i$ entspricht. Für eine geometrisch richtige Musteraufbringung müssen beide Fehllagen korrigiert werden. In den Gleichungen (7) und (8) scheint neben dem Drehwinkel $\varphi$ noch der Winkel $\varepsilon_1$ auf. Dieser Winkel bezeichnete in der ursprünglichen Fourierentwicklung (4) und (5) die Phasenlage des Maximums des 1. Reihenglieds. Wie leicht einzusehen ist, entspricht diese der Winkellage der Exzentrizität des realen Schablonenquerschnitts gegenüber der Nullmarke.

Die Gleichungen (7) und (8) lassen auch erkennen, daß die Schwankung des Musters in Umfangsrichtung gegenüber der Schwankung des Abstands der Schablonenwand in radialer Richtung um einen Drehwinkel von 90 Grad oder - was dasselbe ist - um $N_{um}/4$ Encoderimpulse voreilt. Die letzte Aussage bedeutet, daß der Wert der Musterschwankung in Umfangsrichtung schon um $N_{um}/4$ Encoderimpulse früher abgelegt wurde, und zwar auf einen Speicher, dessen Adresse genau um diese Zahl kleiner ist. Überlegt man, daß an der Gravurstelle bei der Optik die gleichen Abstandsschwankungen wie bei dem Sensor auftreten, nur um den Drehwinkel $\Gamma$ phasenverschoben, dann läßt sich folgende Regel aufstellen, um Gravurfehler zu verhindern.

- Um die Fehler im Musterbild einer mit einer Exzentrizität e umlaufenden aber sonst kreiszylindrischen Schablone auszugleichen, wird der radiale Abstand $s_{sens}$ mittels eines Abstandssensors gemessen. Es wird ferner der Differenzwert $\Delta s_{sens} = s_0 - s_{sens}$ gebildet und dieser Wert wird auf dem Speicherplatz k als $\Delta s_{sens}(k)$ abgelegt. Dieser Wert wird nach weiteren

$$N_\Gamma = N_{um} . \Gamma/2.\pi \qquad (9)$$

vom Encoder empfangenen Impulsen wieder vom Speicherplatz k ausgelesen und der Optik, welche den Laserstrahl fokussiert, als radialer Stellimpuls aufgeprägt. Dieser Sachverhalt kann durch die folgende symbolische Schreibweise dargestellt werden:

$$\Delta s_{opt}(k + N_\Gamma) = \Delta s_{sens}(k) \qquad (10)$$

Die benützte Schreibweise soll heißen, entnehme dem Speicherplatz k bei Empfang des $(k + N_\Gamma)$-ten Impulses den Inhalt $\Delta s_{sens}(k)$ und präge diesen der Optik als Stellweg auf.
- Entnehme ferner ebenfalls bei Empfang des $(k + N_\Gamma)$-ten Impulses den Inhalt des Speicherplatzes mit der Adresse $k - N_{um}/4$ (dieser enthält den um eine Vierteldrehung früher gespeicherten Wert $\Delta s_{sens}$) und verwende diesen für die Bestimmung der Musterverlagerung in Umfangsrichtung. Dieser Sachverhalt wird symbolisch beschrieben durch

$$\Delta t_{opt}(k + N_\Gamma) = \Delta s_{sens}(k - N_{um}/4) \qquad (11)$$

Berechne jetzt mit (11) die berichtigte Adresse des Speicherplatzes für die Musterinformation. Ist der Wert $\Delta s_{sens}(k - N_{um}/4) > 0$ , dann muß der Abruf der Musterinformation voreilen, d. h. es muß die für die Steuerung des Laserstahls auf anderen Speicherplätzen bereitgehaltene Musterinformation einem Speicherplatz entnommen werden, dessen Adresse um die Ganzzahl

$$\frac{\Delta t_{opt}}{2.\pi. R_0} . N_{um} \qquad (12)$$

höher liegt als die Speicherplatznummer für die ideale Schablone. In (12) entspricht der Wert $\Delta t_{opt}$ dem Wert der Beziehung (11). Ist umgekehrt der Wert $\Delta s_{sens}(k-N_{um}/4)<0$ , dann muß die für die Behebung der Musterinformation ausgelesene Speicheradresse um den Betrag, der aus (12) folgt, geringer sein als die Speicherplatznummer für die ideale Schablone wäre.

Noch eine kurze Bemerkung zur Verwendung der ermittelten Stellwerte für die Optik. Der radiale Lagefehler der Schablonenwand wird dadurch ausgeglichen, daß die Optik entsprechend dem ermittelten Stellwert $\Delta s_{opt}$ in Richtung ihrer optischen Achse nachgeführt wird. Bei den hier betrachteten Verhältnissen ist dies aber eine verhältnismäßig langsame Bewegung. da ja vorausgesetzt wurde, daß nur der Fehler 1. Ordnung dank der Innendruckbeaufschlagung der Schablone verbleibt. Die Optik muß dann nur mit einer der Drehzahl der Schablone entsprechenden Frequenz bewegt werden und dies sind bei 900 U/min Schablonendrehzahl 15 Hz. In Umfangsrichtung konnte die Musterlage natürlich ebenfalls durch eine Verstellung der Optik berichtigt werden. Bevorzugt wird aber der trägheitlos mögliche, spätere oder frühere Abruf der Musterinformation aus dem Halbleiterspeicher des Rechners.

<u>Messung und Verarbeitung des Rundlauffehlers bei einer drucklosen Schablone, die keiner Schwingungsanregung ausgesetzt ist:</u>

Es werden jetzt die Verhältnisse bei einer Schablone betrachtet, die an ihren beiden Enden durch zwei genau rundlaufende Spannvorrichtungen gehalten wird, und die auf ihrer Innenseite *nicht* mit einem überhöhten Druck beaufschlagt ist. Der Drehantrieb der Schablone soll vollkommen schwingungsarm ausgebildet sein, etwa dadurch, daß der Antrieb über dämpfende Keil- oder Flachriemen erfolgt und auch alle Riemenscheiben und Wellen sehr gut ausgewuchtet sind und der antreibende Motor ein sehr gleichmäßiges Drehmoment abgibt, so daß keine Membranschwingungen der Schablonenwand auftreten sollen. Bei einer solchen Schablone muß man Rundlauffehler erwarten, deren Fourierdarstellung gegenüber einer Schablone, wie sie bereits zuvor behandelt wurde, noch beträchtliche Werte für die Reihenglieder höherer Ordnung enthält. Alle diese Rundlauffehler sind statischer Natur, d. h. sie laufen mit der Schablone um, oder anders gesagt, sie ändern sich nicht in einem mit der Schablone fest verbundenen gedachten Koordinatensystem. Hat man die Ausgleichswege ermittelt, dann benötigt man jetzt für den Ausgleich sehr schnell reagierende Stellmechaniken. etwa Stellelemente, die auf piezoelektrischen Effekten beruhen, weil ja die Frequenz der Ausgleichsbewegung einem Wert entsprechen muß, welcher gleich der Drehzahl multipliziert mit der Ordnung des jeweiligen Fouriergliads ist. Dies gilt besonders für den Ausgleich der radialen Fehllage der Schablonenwand. Die Fehllage des Musters in Umfangsrichtung kann wieder mit der trägheitslosen Methode des späteren oder früheren Abrufs der Musterinformation berichtigt werden.

Zunächst gilt es, die beiden Korrektursignale zu ermitteln. Pur die Berechnung der Fehllage der wirklichen Schablone kann versucht werden, die Bogenlänge der realen Schablone unter Verwenndung von (4) zu ermitteln und In analytischer Form darzustellen. Pur die Bogenlänge in Polarkoordinaten gilt bekanntlich

$$b = \int_{\varphi_0}^{\varphi_1} \sqrt{r^2 + \left(\frac{dr}{d\varphi}\right)^2} \, d\varphi = \int_{\varphi_0}^{\varphi_1} r \cdot \sqrt{1 + \frac{1}{r^2}\left(\frac{dr}{d\varphi}\right)^2} \, d\varphi \cong \int_{\varphi_0}^{\varphi_1} \left(r + \frac{1}{2 \cdot r}\left(\frac{dr}{d\varphi}\right)^2\right) d\varphi \qquad (13)$$

Hierin entspricht

$$\frac{dr}{d\varphi}$$

der Ableitung der Gleichung (4) nach $\varphi$ und es wurde wegen der im allgemeinen kleinen Fehler angenommen

$$\frac{1}{r^2} \cdot \left(\frac{dr}{d\varphi}\right)^2 \ll 1 \ .$$

Für

$$\frac{dr}{d\varphi}$$

folgt aus (4)

$$\frac{dr}{d\varphi} = -\sum_{i=1}^{N_{um}/2} c_i \cdot i \cdot \sin(i \cdot \varphi + \varepsilon_i) \qquad (14)$$

Setzt man dies in (13) ein, so folgen bereits bei kurzen Fourier-Reihen komplizierte Ausdrücke für die Bogenlänge b, und damit erfordert die Ermittlung einer analytischen Beziehung für die Musterverlagerung und erst recht deren numerische Auswertung einen für die Anwendung recht hohen Rechenaufwand.

Besser ist eine andere Vorgangsweise. BeiJedem empfangenen Encoderimpuls mißt man $s_{sens}(k)$. Mit diesem Wert bildet man $\Delta s_{sens}(k)=s_0-s_{sens}(k)$, so wie dies schon zuvor beschrieben wurde und speichert diese Werte. Aus zwei aufeinanderfolgenden Meßwerten $\Delta s_{sens}(k)$ und $\Delta s_{sens}(k+1)$ läßt sich dann die Länge des zwischen diesen Meßpunkten liegenden Teilstücks des Schablonenumfangs zu

$$db(k) = \sqrt{(\Delta s_{sens}(k)\text{-}\Delta s_{sens}(k+1))^2+\left(R_0+\frac{\Delta s_{sens}(k)+\Delta s_{sens}(k+1)}{2}\right)^2\cdot\left(\frac{2.\pi}{N_{Um}}\right)^2} \qquad (15)$$

berechnen.

Summiert man diese Teillängen ab dem durch das Nullmarkensignal markierten Meßpunkt bis zum k-ten Meßpunkt, so erhält man

$$Umf_{ist}(k) = \sum_{i=1}^{k} db(i) \qquad (16)$$

Der Sollumfang der idealen Vergleichs-Schablone bis zu dem gleichen k-ten Meßpunkt folgt zu

$$Umf_{soll}(k) = 2.\pi.\frac{k}{N_{Um}}.R_0 \qquad (17)$$

Die Differenz zwischen diesen beiden Werten sollte dem Verlagerungsfehler des Musters in Umfangsrichtung entsprechen. Da aber stets Einflüsse vorliegen, welche erhebliche Umfangsdifferenzen verursachen, z. B. thermisch bedingte Lageänderungen des Sensors oder ein geringfügig größerer Schablonendurchmesser oder der durch die Aufteilung des Schablonenumfangs in $N_{um}$ Meßstellen bedingte Polygonaleffekt, ist es zweckmäßig, nach jedem vollen Umlauf der Schablone einen Korrekturfaktor zu ermitteln, der während des nachfolgenden Umlaufs für die Berichtigung der Differenzbildung verfügbar ist. Der Korrekturfaktor wird aus

$$K_{korr} = \frac{Umf_{soll}(N_{Um})}{Umf_{ist}(N_{Um})} \qquad (18)$$

ermittelt und für die Berechnung des Verlagerungsfehlers in Umfangsrichtung wie folgt verwendet:

$$\Delta t_{sens}(k)=Umf_{soll}(k)\text{-}K_{korr}.Umf_{ist}(k) \qquad (19)$$

Es werden jetzt beide Wertfolgen $\Delta s_{sens}(k)$ und $\Delta t_{sens}(k)$ für jeden der eingehenden Impulse (von 0 bis $N_{um}$) gespeichert und die Korrekturwerte unter Benützung der schon bei (8) und (9) verwendeten symbolischen Schreiweise wie folgt gebildet

$$\Delta s_{opt}\langle k+N_\Gamma\rangle = \Delta s_{sens}(k) \qquad (20)$$

$$\Delta t_{opt}\langle k+N_\Gamma\rangle = \Delta t_{sens}(k) \qquad (21)$$

Die hier anzuwendenden Regeln für die Vermeidung von Gravurfehlern lauten somit

- Bilde bei dem k-ten eingehenden Encoderimpuls den Wert $\Delta s_{sens}(k) = s_0 - s_{sens}(k)$ und speichere diesen auf dem Speicherplatz der Wertefolge $\Delta s_{sens}$ mit der Adresse k. Bei dem $\langle k+N_\Gamma\rangle$-ten Impuls behebe den Wert vom Speicherplatz k und präge diesen der Optik als radialen Stellweg auf.
- Bilde bei dem k-ten eingehenden Encoderimplus den Wert $\Delta t_{sens}(k)$ entsprechend Beziehung (19) und speichere diesen auf dem Speicherplatz der Wertefolge $\Delta t_{sens}$ mit der Adresse k. Bei dem $\langle k+N_\Gamma\rangle$-ten Impuls behebe den Wert vom Speicherplatz k und präge entweder diesen Wert als tangentiellen Stellweg der Optik auf oder berechne gemäß der Beziehung (10) einen Ganzzahlwert, um welchen die Adresse des Speicherplatzes der Musterinformation zu erhöhen ist, wenn der Wert $s_0 - \Delta s_{sens}(k - N_{um}/4)$ kleiner ist als $s_0$, wenn jedoch dieser Wert größer ist als $s_0$, dann ist die Adresse des Speicherplatzes der Musterinformation um den aus der Beziehung (10) berechneten

Wert zu verringern.

<u>Messung und Verarbeitung des Rundlauffehlers bei einer drucklosen Schablone, die durch äußere Kräfte zu Schwingungen des dünnen Hohlzylindermantels angeregt wird.</u>

Als letzter Fall wird eine Schablone betrachtet, die auf ihrer Innenseite nicht mit einem Druck beaufschlagt ist, und die durch zeitlich veränderliche äußere Kräfte zu Schwingungen angeregt wird. In diesem Fall mißt ein erster Abstandssensor (es müssen später noch weitere Sensoren eingeführt werden) einen Abstand, für dessen zeitabhängige Änderungen zwei verschiedene Ursachen maßgebend sind. Die erste Ursache ist die statische Rundlaufabweichung. Diese liegt als Funktion von $\chi$ über den Umfang der Schablone vor und ist durch (4) definiert. Der Winkel $\chi$ wird von einer am Schablonenumfang angebrachten Nullmarke aus gemessen, und zwar in einem Polarkoordinatensystem, welches fest mit der Schablone verbunden ist und dessen Ursprung auf der Schablonenachse liegt. Dieser Winkel soll positiv in jener Richtung gezählt werden, welche der Drehrichtung entgegengesetzt ist. Da sich die Schablone mit der Winkelgeschwindigkeit $\omega$ dreht, bewegen sich die statischen Rundlaufabweichungen mit der Umfangsgeschwindigkeit $R \cdot \omega$ an dem Sensor vorbei. Ferner soll eine Winkellage $\varphi$ der Schablone gegenüber der Position des ersten Sensors definiert werden, und zwar am besten so, daß dieser Winkel zwischen der Nullmarke und dem ersten Sensor gemessen wird.

Für $\varphi$ gilt dann

$$\varphi = \omega \cdot t \tag{22}$$

Mit dieser Beziehung ist auch der Zeitpunkt t = 0 definiert. Dieser ist dadurch bestimmt, daß sich die Nullmarke gerade an der Position des ersten Sensors vorbeibewegt. Den zuvor beschriebenen Abstandsänderungen überlagern sich Abstandsvariationen, die auf die Schwingung der Schablone zurückzuführen sind, und dieses ist die zweite Ursache für die vom Sensor gemessenen zeitveränderlichen Abstände. Die Zeitabhängigkeit dieses zweiten Anteils der Abstandsänderung ist auch der Grund, welcher es nahelegt, hier die Zeit t in die Überlegungen einzubinden. Um die Verhältnisse nicht übermäßig zu komplizieren, soll angenommen werden, daß die dünne Schablone nur mit *einer* Frequenz schwingt. Außerdem soll der Maximalwert der Schwingungsamplitude während der Beobachtungszeit konstant bleiben. Dieser Fall wird der in der Praxis wichtigste Fall sein, denn es ist anzunehmen, daß die Schwingungsanregung durch die Drehbewegung der Schablone verursacht wird und die Schwingungsfrequenz daher der Drehzahl oder einem Vielfachen derselben entspricht. Die stets vorhandene Materialdämpfung bewirkt nach kurzer Einschwingzeit einen stationären Schwingungszustand. Zu den Abstandsänderungen aufgrund der statischen Rundlauffehler (Beziehungen (4), (5)) muß daher noch ein Schwingungsanteil addiert werden. Es gilt dann für die von einem ersten Sensor gemessene Rundheitsabweichung:

$$s_{sens,1}(\varphi) = A - R_0 - \sum_{i=1}^{N_{um}/2} [a_i.\cos(i.\varphi) + b_i.\sin(i.\varphi)] + + c_{dyn}.\sin(n.\varphi + \Phi).\cos(\kappa.t + \theta) \tag{23}$$

Das zur Beziehung (5) hinzugefügte Glied

$$c_{dyn}.\sin(n.\varphi + \Phi).\cos(\kappa.t + \theta) \tag{24}$$

besteht, wie dies bei schwingenden Kontinua bekannt ist, aus drei Faktoren, nämlich einer Amplitude $c_{dyn}$ der Ortsfunktion $\sin(n.\varphi + \Phi)$ und der zeitabhängigen Funktion $\cos(\kappa.t + \theta)$. Hierin bedeutet $c_{dyn}$ den maximalen Schwingungsausschlag der Schablone, also die Amplitude an den Stellen der Schwingungsbäuche. n ist die Zahl der Schwingungsbäuche entlang des Umfangs der Schablone und wird manchmal auch als Ordnung der Schwingung bezeichnet. $\Phi$ ist der unbekannte Winkelabstand zwischen dem nächstgelegenen Schwingungsknoten auf der Schablone und der Nullmarke. $\theta$ ist der ebenfalls unbekannte, in einen Phasenwinkel umgerechnete Zeitabstand $T_0$ des letzten Maximalausschlags der Schwingung vom Zeitpunkt t = 0 und es gilt $\theta = T_0.\kappa$. Schließlich bedeutet $\kappa$ die Kreisfrequenz der Schwingung.

Für das Verständnis des additiven Glieds (24) ist es zweckmäßig, einen sensorfesten Beobachtungsstandpunkt einzunehmen und das Schwingungsbild der Schablone (also ihre Bäuche und Knoten) in seiner Umfangslage so zu betrachten, als ob es fest mit den übrigen Formfehlern der Schablone verbunden wäre. Aber im Gegensatz zu den statischen Formfehler, deren Größe zeitlich konstant ist, pulsieren die Schwingungsbäuche im Takt der Schwingfrequenz und gleichzeitig bewegt sich dieses pulsierende Gebilde an dem Sensor vorbei. Noch eine weitere Bemerkung zu der Ordnung n der Schwingung. Diese Ordnung n bezieht sich auf die Zahl der Schwingungsbäuche um Umfang der Schablone; die Bäuche in der Achsrichtung interessieren hier nicht. n = 1 bedeutet, daß nur ein einziger Schwingungsbauch am Umfang auftritt und mit der Schablone umläuft. Dies entspricht einer Biegeschwingung der Schablone, wie sie etwa in der Nähe einer kritischen Drehzahl beobachtet werden kann. Aus der Mechanik ist bekannt, daß auch bei der Biegeschwingung der Schwingungsbauch mit der Drehung der Welle umläuft. Bei n = 2 schwingt die Schablone so, daß sich ein Oval als Schwingungsform ausbildet und bei n = 3 ist die Schwingungsform ein Dreieck. Schwingt die Schablone mit n = 2 als Oval, dann würde ein mit dem Schablonensystem rotierender Beobachter einen Ring sehen, der einmal in einer Richtung und in der nächsten Halbperiode in der dazu senkrechten Richtung den größeren Durchmesser aufweist. Ein Abstands-Sensor mißt natürlich nur einen zeitlich veränderlichen Abstand zu diesem umlaufenden und zugleich schwingenden Gebilde. Im allgemeinen muß die Schablone nicht gerade dann maximal ausschlagen, wenn der Schwingungsbauch am Sensor vorbeiläuft. Aus diesem Grunde darf man erwarten, daß es mit einem einzigen Sensor nicht möglich ist, den Schwingungszustand der Schablone zu erfassen und schon gar nicht diesen von den Formfehlern trennen zu können. Zu der gleichen Schlußfolgerung kann man auch durch Betrachtung der Beziehung (23) gelangen. Man verfügt nach einer Vermessung eines vollständigen Schablonenumfangs zwar über $N_{um}$ Meßwerte, muß aber mit diesen die $N_{um}$ Koeffizienten $a_i$ und $b_i$ (i = 0, 1, ..., $N_{um}$/2) der Fourier-Reihenglieder in (23) bestimmen. Für die Ermittlung der unbekannten Parameter des dynamischen Glieds (24) bleiben dann keine Bestimmungsgleichungen mehr übrig.

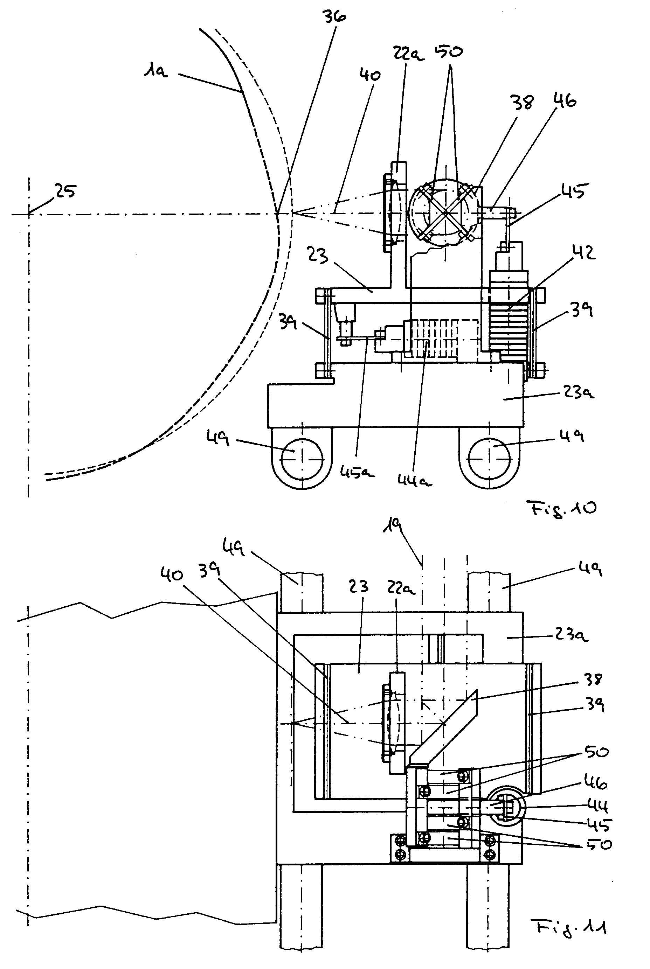

Es soll daher unter einem Winkel $\alpha$ vom ersten Sensor, der die Abstände zur Schablonenwand gemäß der Beziehung (23) erfaßt, ein zweiter Sensor angeordnet werden. Ein auf diesem Sensor positionierter Beobachter B2 würde die gleiche schwingende Schablone, also deren Fehler, Schwingungsbäuche und Schwingungsknoten sehen wie ein Beobachter B1 auf dem ersten Sensor (Figur 3).

In Figur 3 bedeuten:

- K1 = Schwingungsknoten für Normalkomponente der Schwingbewegung = Schwingungsbauch für Tangentialkomponente der Schwingbewegung;
- K2 = Schwingungsbauch für Normalkomponente der Schwingbewegung = Schwingungsknoten für Tangentialkomponente der Schwingbewegung.

Es soll nun angenommen werden, daß der Beobachter B1 zu einem beliebigen Zeitpunkt t während einer Umdrehung eine Aufnahme des Momentanzustandes der Schablone macht und die Winkelabstände zu den Schwingungsbäuchen und den markanten Fehlern registriert. Würde der Beobachter B2 zum gleichen Zeitpunkt ebenfalls den Momentanzustand der Schablone ausmessen, dann würde er zwar die gleichen Ausschläge der Schwingungsbäuche, aber andere relative Winkellagen zu seiner Position feststellen. Letztere unterscheiden sich nämlich um den Winkel $\alpha$ von der Momentanaufnahme des Beobachters B1. Wartet aber der Beobachter B2 jenes Zeitintervall $\Delta t = \alpha/\omega$ ab, welches die Schablone benötigt, um sich genau um den Winkel $\alpha$ zu drehen, sieht der Beobachter B2 die gleichen relativen Momentanlagen der markanten Schablonenfehler, der Schwingungsbäuche und -knoten, aber andere Momentanwerte der Schwingungsausschläge. Letztere ergeben sich entsprechend der Beziehung (24) zu dem späteren Zeitpunkt

$$t + \Delta t = t + \alpha/\omega \text{ zu } c_{dyn}.\sin(n.\varphi+\Phi).\cos(\kappa.(t+\alpha/\omega)+\theta) \qquad (26)$$

Die Beziehung (23) hat für den Abstand des ersten Sensors von der Schablonenwand zum Zeitpunkt t gegolten, entsprechend gilt für den Abstand des zweiten Sensors zur Schablonenwand völlig gleichartig, jedoch zum späteren Zeitpunkt t + $\alpha/\omega$ die Beziehung

$$s_{sens,\,2}(\varphi) = \underbrace{A - R_0}_{s_0} - \sum_{i=1}^{N_{um}/2} \left[ a_i.\cos(i.\varphi) + b_i.\sin(i.\varphi) \right] + {} + c_{dyn}.\sin(n.\varphi + \Phi).\cos(\kappa.(t + \alpha/\omega) + \theta)$$

$$(27)$$

In (27) bezeichnet $\varphi$ wieder den gleichen Drehwinkel der Schablone wie in (23). Mit diesen Beziehungen (23) und (27) sind jene Gleichungen erarbeitet, die notwendig sind, um zu überlegen, ob es mit den Meßergebnissen von zwei Sensoren schon möglich ist, die Abstände der Schablonenwand zu einem beliebigen Beobachter oder Bauteil, etwa der Optik, genau vorherzusagen. Dieser Beobachter soll fest mit einem Sensorsystem verbunden sein, aber einen beliebig vorgegebenen Winkel zu diesem an der Peripherie der drehenden Schablone einnehmen.

Die Beziehungen (23) und (27) werden nochmals angeschrieben, jedoch wird durch eine geeignete Schreibweise der linken Seite besser hervorgehoben, daß es sich um zwei verschiedene Abstände handelt, die durch zwei verschiedene Sensoren zu zwei verschiedenen Zeitpunkten gemessen werden.

$$\Delta s_{sens,1}(t)=a_0 + \sum_{i=1}^{N_{um}/2} [a_i.\cos(i.\varphi)+b_i.\sin(i.\varphi)]+ +c_{dyn}.\sin(n.\varphi +\Phi).\cos(\kappa.t +\theta) \qquad (23a)$$

$$\Delta s_{sens,2}(t+\Delta t)=a_0 + \sum_{i=1}^{N_{um}/2} [a_i.\cos(i.\varphi)+b_i.\sin(i.\varphi)]+ + c_{dyn}.\sin(n.\varphi+\Phi).\cos(\kappa.(t+\alpha/\omega)+\theta) \qquad (27a)$$

Bildet man nun die Differenz dieser Meßergebnisse, und führ man anstelle der Zeit gemäß (22) die Winkelkoordinate $\varphi$ ein (t = $\varphi/\omega$), so entfallen die statischen Fehleranteile durch Subtraktion und man erhält für das Differenzsignal

$$D_{21}=\Delta s_{sens,1}(t)-\Delta s_{sens,2}(t+\Delta t)= \qquad (28)$$

$$=c_{dyn}.\sin(n.\varphi+\Phi).\left[\cos\left(\varphi.\frac{\kappa}{\omega}+\theta\right)-\cos\left(\varphi.\frac{\kappa}{\omega}+\alpha.\frac{\kappa}{\omega}+\theta\right)\right]$$

Man muß nun versuchen, die den dynamischen Fehleranteil charakterisierenden Parameter dieser Beziehung zu bestimmen. Um die physikalische Aussage der Beziehung (28) besser offenzulegen, bildet man zwei Hilfsgrößen $\varepsilon$ und $\eta$, für die gelten soll

$$\cos(\varepsilon) =\eta.\left[1-\cos\left(\frac{\kappa}{\omega}.\alpha\right)\right] \qquad (29a)$$

und

$$\sin(\varepsilon) =\eta.\sin\left(\frac{\kappa}{\omega}.\alpha\right) \qquad (29b)$$

Man erhält dann aus (28)

$$D_{21}=\frac{c_{dyn}.\eta}{2}.\left\{\sin\left[\left(n.\frac{\kappa}{\omega}\right).\varphi+\Phi-(\theta-\varepsilon)\right]+\sin\left[\left(n+\frac{\kappa}{\omega}\right).\varphi+\Phi+(\theta-\varepsilon)\right]\right\} \qquad (30)$$

und erkennt aus dieser Form der Differenz der beiden Sensorsignale, daß sie aus zwei Sinussignalen mit gleich großer Amplitude aber verschiedener Frequenz zusammengesetzt ist, also einer Schwebung entspricht. Die unbekannten Parameter in der Beziehung (30) und natürlich auch in (28) sind die Größen $c_{dyn}$, $\kappa$, $\omega$, $\theta$, n und $\Phi$. Die Hilfsgrößen $\varepsilon$ und $\eta$ hingegen lassen sich auf $\kappa$, $\omega$ und den bekannten Winkelabstand $\alpha$ zwischen dem ersten und zweiten Sensor zurückführen. Es gilt

$$\varepsilon = \arctan\left(\frac{\sin\left(\frac{\kappa}{\omega}.\alpha\right)}{1-\cos\left(\frac{\kappa}{\omega}.\alpha\right)}\right) \qquad (31a)$$

und

$$\eta = \frac{1}{\sqrt{2.\left[1-\cos\left(\frac{\kappa}{\omega}.\alpha\right)\right]}} \qquad (31b)$$

Für(31a) und (31b) läßt sich auch ein unmittelbarer funktionaler Zusammenhang durch Elimination des Parameters $\frac{\kappa}{\omega}.\alpha$ finden. Auf diesen wird später zurückgegriffen.

$$\eta = \frac{1}{2.\cos(\varepsilon)} \tag{31c}$$

$$\varepsilon = \arccos\left(\frac{1}{2.\eta}\right) \tag{31d}$$

Die besondere Form des durch die Gleichung (30) beschriebenen Differenzsignals läßt es zweckmäßig erscheinen, diese Gleichung in einer Form anzuschreiben, die einfachen Vergleich mit einer Fourier-Reihe erlaubt.

Zu diesem Zweck bildet man

$$D_{21} = \frac{C_{dyn}.\eta}{2}.\left\{\sin\left[\left(n-\frac{\kappa}{\omega}\right).\varphi\right].\cos[\Phi-(\theta-\varepsilon)]+\cos\left[\left(n-\frac{\kappa}{\omega}\right).\varphi\right].\sin[\Phi-(\theta-\varepsilon)]\right\}+ \tag{32}$$

$$+\frac{C_{dyn}.\eta}{2}.\left\{\sin\left[\left(n+\frac{\kappa}{\omega}\right).\varphi\right].\cos[\Phi+(\theta-\varepsilon)]+\cos\left[\left(n+\frac{\kappa}{\omega}\right).\varphi\right].\sin[\Phi+(\theta-\varepsilon)]\right\}$$

setzt hierin

$$a_{nied}=\frac{C_{dyn}.\eta}{2}.\sin[\Phi-(\theta-\varepsilon)] \qquad b_{nied}=\frac{C_{dyn}.\eta}{2}.\cos[\Phi-(\theta-\varepsilon)] \tag{33}$$

$$a_{hoch}=\frac{C_{dyn}.\eta}{2}.\sin[\Phi+(\theta-\varepsilon)] \qquad b_{hoch}=\frac{C_{dyn}.\eta}{2}.\cos[\Phi+(\theta-\varepsilon)]$$

und erhält

$$D_{21}=a_{nied}.\cos\left[\left(n-\frac{\kappa}{\omega}\right).\varphi\right] + b_{nied}.\sin\left[\left(n-\frac{\kappa}{\omega}\right).\varphi\right] +a_{hoch}.\cos\left[\left(n+\frac{\kappa}{\omega}\right).\varphi\right] + b_{hoch}.\sin\left[\left(n+\frac{\kappa}{\omega}\right).\varphi\right] \tag{34}$$

in der gewünschten Fourier-Form. Man sieht, daß von dieser Reihe nur zwei Glieder aufscheinen. Das erste dieser Glieder ist jenes der Ordnung $n-\kappa/\omega$. Dieses kann von nullter Ordnung sein, wenn $n-\kappa/\omega=0$ wird. Der Quotient $\kappa/\omega$ wird aus $\kappa$ der Kreisfrequenz der Membranschwingung und aus der Winkelgeschwindigkeit $\omega$ der Schablone gebildet. Da die Schwingung durch die Drehbewegung der Schablone angeregt wird, können nur ganzzahlige Verhältnisse $\kappa/\omega$ auftreten und die Ordnungen $n-\kappa/\omega$ und $n+\kappa/\omega$ bleiben dann ebenfalls ganzzahlig.

Würde man die Werte der Koeffizienten $a_{nied}$, $b_{nied}$, $a_{hoch}$ und $b_{hoch}$ und die Parameter n, $\kappa$ und $\omega$ in der Beziehung (32) kennen, so könnte man für jeden beliebigen Winkel $\varphi$ den Wert des Differenzsignals $D_{21}$ ermitteln. Nun kennt man Koeffizienten und Parameter leider nicht, wohl aber verfügt man über die für Jeweils eine Umdrehung abgespeicherten Wert $D_{21} = \Delta s_{sens,1},-\Delta s_{sens,2}$. Aus diesen lassen sich die Koeffizienten $a_{nied}$ , ..., $b_{hoch}$ z. B. mit der bekannten Methode der schnellen Fouriertransformation (FFT) rückrechnen. Sind die Koeffizienten ermittelt, dann stehen die vier Gleichung (31) zur Verfügung, um weitere Unbekannte der sechs Parameter $c_{dyn}$, $\varepsilon$, $\eta$, $\Phi$, n und $\theta$ zu berechnen. Außer den genannten Koeffizienten fallen bei der FFT' auch noch die Ordnungen dieser Koeffizienten an, also

$$O1=n-\kappa/\omega \tag{34a}$$

$$O2=n+\kappa/\omega \tag{34b}$$

weil die Koeffizienten aller anderen Ordnungen gleich Null sind.

Sehr einfach läßt sich der Wert von $\Phi$ ermitteln:

$$a_{nied}=\frac{C_{dyn}.\eta}{2}.[\sin(\Phi).\cos(\theta-\varepsilon)-\sin(\theta-\varepsilon).\cos(\Phi)]$$

$$a_{hoch} = \frac{C_{dyn} \cdot \eta}{2} \cdot [\sin(\Phi).\cos(\theta-\varepsilon)+\sin(\theta-\varepsilon).\cos(\Phi)]$$

Durch Summenbildung der beiden letzten Ausdrücke erhält man

$$a_{nied}+a_{hoch}=c_{dyn}.\eta.\sin(\Phi).\cos(\theta-\varepsilon); \qquad (35)$$

völlig ähnlich folgt:

$$b_{nied}+b_{hoch} =c_{dyn}.\eta.\cos(\Phi).\cos(\theta-\varepsilon) \qquad (36)$$

und aus (33) und (34) schließlich

$$\Phi = \arctan\left(\frac{a_{nied}+a_{hoch}}{b_{nied}+b_{hoch}}\right) \qquad (37)$$

Ferner läßt sich zeigen, daß für die Differenz $\theta - \varepsilon$ gilt:

$$\theta-\varepsilon =\frac{1}{2}\cdot\left[\arctan\left(\frac{a_{hoch}}{b_{hoch}}\right)-\arctan\left(\frac{a_{nied}}{b_{nied}}\right)\right] \qquad (38)$$

Aus den Gleichungen (29a) und (29b) kann man den Wert $\alpha.\kappa/\omega$ eliminieren und man erhält für $\varepsilon$ als Funktion von $\eta$:

$$\varepsilon =\arccos\left(\frac{1}{2.\eta}\right) \qquad (39)$$

Letztlich kann man mit Hilfe von (32) zeigen, daß gelten muß

$$\frac{c_{dyn}^2 \cdot \eta^2}{4}=a_{nied}^2 +b_{nied}^2 =a_{hoch}^2 +b_{hoch}^2 \qquad (40)$$

Die Ausdrücke (38), (39) und (40) stellen 3 Gleichungen für die Ermittlung der 4 Unbekannten $\theta$, $\varepsilon$, $\eta$ und $c_{dyn}$ dar. Das Gleichungssystem ist daher nicht ausreichend bestimmt und eine Lösung ist noch nicht möglich. Dies hätte schon aus (34) erkannt werden können, denn schon dieses Gleichungssystem war unterbestimmt und darüber hinaus kamen die Größen $\Phi$ und $\varepsilon$ und ebenso die Größen $c_{dyn}$ und $\eta$ in (34) stets in der gleichen Kombination vor. Für eine Lösung der vorliegenden Aufgabe ist es bei diesem Ausführungsbeispiel daher notwendig, einen dritten Abstandssensor zu montieren, der zu dem ersten Abstandssensor um den Einbauwinkel $\beta$ versetzt ist, wobei $\beta \neq \alpha$ sein soll. Erst mit den von diesem dritten Sensor zusätzlich gelieferten Meßwerten wird es möglich sein, alle für die Bestimmung der Schablonenschwingung notwendigen Größen zu ermitteln und auf diese Weise die Rundheitsabweichungen zufolge der Schwingung von den statischen Rundheitsabweichungen zu trennen. Dies ist notwendig, weil die Berechnung der radialen und tangentiellen Lagefehler am Ort des Laserstrahls für die statische Abweichung und die Schwingungsabweichung nur getrennt erfolgen kann.

Zunächst ist aber noch eine Umformung der Beziehung (40) notwendig. Aus (40) folgt, wenn man $\eta$ durch (31b) ersetzt und berücksichtigt, daß $1-\cos(x)=2.\sin^2(^x/_2)$ ist

$$a_{nied}^2 +b_{nied}^2 =a_{hoch}^2 +b_{hoch}^2 =\frac{c_{dyn}^2 \cdot \eta^2}{4}=\frac{c_{dyn}^2}{4}\cdot\frac{1}{2.\left[1-\cos\left(\frac{\kappa}{\omega}.\alpha\right)\right]} = \frac{c_{dyn}^2}{16.\sin^2\left(\frac{1}{2}.\frac{\kappa}{\omega}.\alpha\right)} \qquad (41)$$

Ganz ähnlich wie bisher für das Differenzsignal für den zweiten und ersten Sensor nachgewiesen wurde, erhält man für das Differenzsignal zwischen dem dritten und ersten Sensor anstelle von (34)

$$D_{31} = \Delta s_{sens,1}(t) - \Delta s_{sens,3}(t + \Delta \bar{t}) = \tag{42}$$

$$= \bar{a}_{nied} \cdot \cos\left[\left(n - \frac{\kappa}{\omega}\right) \cdot \varphi\right] + \bar{b}_{nied} \cdot \sin\left[\left(n - \frac{\kappa}{\omega}\right) \cdot \varphi\right] + + \bar{a}_{hoch} \cdot \cos\left[\left(n + \frac{\kappa}{\omega}\right) \cdot \varphi\right] + \bar{b}_{hoch} \cdot \sin\left[\left(n + \frac{\kappa}{\omega}\right) \cdot \varphi\right]$$

Die Werte $\bar{a}_{nied}$, $\bar{b}_{nied}$, $\bar{a}_{hoch}$ und $\bar{b}_{hoch}$ werden, ähnlich wie schon früher für die Koeffizienten $a_{nied}$, $b_{nied}$, $a_{hoch}$ und $b_{hoch}$, mit Hilfe einer FFT der durch Messung ermittelten Wertefolge für $D_{31}$ berechnet. Für diese Werte gilt analog zu (39)

$$\bar{a}^2_{nied} + \bar{b}^2_{nied} = \bar{a}^2_{hoch} + \bar{b}^2_{hoch} = \frac{c^2_{dyn} \cdot \bar{\eta}^2}{4} = \frac{c^2_{dyn}}{4} \cdot \frac{1}{2 \cdot \left[1 - \cos\left(\frac{\kappa}{\omega} \cdot \beta\right)\right]} = \frac{c^2_{dyn}}{16 \cdot \sin^2\left(\frac{1}{2} \cdot \frac{\kappa}{\omega} \cdot \beta\right)} \tag{43}$$

Es darf erinnert werden, daß $c_{dyn}$ der maximale Schwingungsausschlag der Schablone in Ihren Umfangsbäuchen ist. Dieser hängt daher nicht von der Position eines Sensors ab. Wählt man nun noch $\beta = 2\,\alpha$, dann folgt aus (41) und (43):

$$\frac{\sin^2\left(\frac{1}{2} \cdot \frac{\kappa}{\omega} \cdot 2 \cdot \alpha\right)}{\sin^2\left(\frac{1}{2} \cdot \frac{\kappa}{\omega} \cdot \alpha\right)} = \frac{a^2_{nied} + b^2_{nied}}{\bar{a}^2_{nied} + \bar{b}^2_{nied}}$$

und weiter

$$\frac{\sin\left(\frac{1}{2} \cdot \frac{\kappa}{\omega} \cdot 2 \cdot \alpha\right)}{\sin\left(\frac{1}{2} \cdot \frac{\kappa}{\omega} \cdot \alpha\right)} = \frac{2 \cdot \sin\left(\frac{1}{2} \cdot \frac{\kappa}{\omega} \cdot \alpha\right) \cdot \cos\left(\frac{1}{2} \cdot \frac{\kappa}{\omega} \cdot \alpha\right)}{\sin\left(\frac{1}{2} \cdot \frac{\kappa}{\omega} \cdot \alpha\right)} = 2 \cdot \cos\left(\frac{1}{2} \cdot \frac{\kappa}{\omega} \cdot \alpha\right) = \sqrt{\frac{a^2_{nied} + b^2_{nied}}{\bar{a}^2_{nied} + \bar{b}^2_{nied}}}$$

und letztendlich erhält man für

$$\frac{\kappa}{\omega} = 2 \cdot \arccos\left(\frac{1}{2} \cdot \sqrt{\frac{a^2_{nied} + b^2_{nied}}{\bar{a}^2_{nied} + \bar{b}^2_{nied}}}\right) / \alpha \tag{44}$$

Diese Beziehung ist der Schlüssel für die weiteren Auswertungen und gestattet nun endlich die Ermittlung von $\kappa/\omega$. Ist dieser Wert bekannt, dann kann mit (31a) die Größe $\varepsilon$ und mit (31b) auf den Wert von $\eta$ rückgeschlossen werden. Aus (38) folgt mit bekanntem $\varepsilon$ die Große $\Phi$ und aus (40) mit bekanntem $\eta$ schließlich der Wert von $c_{dyn}$. Aus (34a) oder (34b) kann auch die Zahl der Schwingungsbäuche n (= Ordnung der Schwingung) bestimmt werden. Es sind jetzt alle Parameter, die im Schwingungsanteil der Beziehung (23) als unbekannt angesetzt wurden, bestimmt.

Die vom ersten Sensor während einer Umdrehung gemessen Werte $s_{sens,1}(\varphi)$ können daher von ihrem Schwingungsanteil (24) befreit werden. Zu achten ist hierbei auf die richtige Bestimmung von $\varphi$ und t. In der Ortsfunktion $\sin(n \cdot \varphi + \Phi)$ des Schwingungsanteils (24) bedeutet $\varphi$ den Winkel zwischen der Nullmarke und dem ersten Sensor zum Meßzeitpunkt t. Man erhält für den vom dynamischen Anteil befreiten Abstand der Schablonenwand zum Sensor

$$s_{sens,1,statisch}(\varphi) = s_{sens,1}(\varphi) - c_{dyn} \cdot \sin(n \cdot \varphi + \Phi) \cdot \cos\left(\frac{\kappa}{\omega} \cdot \varphi + \Theta\right) =$$

$$= \underbrace{A - R_0}_{s_0} - \sum_{i=1}^{N_{um}/2} \left[a_i \cdot \cos(i \cdot \varphi) + b_i \cdot \sin(i \cdot \varphi)\right] \tag{45}$$

Für den statischen Teil der Differenz der Meßabstände vom Sensor zur idealen Schablone und vom Sensor zur realen Schablone $\Delta s_{sens,1,statisch}=s_0 -s_{sens,1,statisch}(\varphi)$ folgt somit

$$\Delta s_{sens,1,statisch}(\varphi)=s_0-s_{sens,1}(\varphi)+c_{dyn}.\sin(n.\varphi+\Phi).\cos\left(\frac{\kappa}{\omega}.\varphi+\theta\right) \qquad (47)$$

Die weitere Rechnung wird besser überschaubar, wenn $\varphi$ in (47) durch die Zahl der Encoderimpulse ersetzt wird, die mit dem Nullimpuls beginnend gezählt werden. Es wird dann

$$\Delta s_{sens,1,statisch}(k)=s_0-s_{sens,1}(k)+c_{dyn}.\sin\left(n.\frac{k}{N_{um}}2.\pi+\Phi\right).\cos\left(\frac{\kappa}{\omega}.\frac{k}{N_{um}}2.\pi+\theta\right) \qquad (48)$$

und dieser Wert $\Delta s_{sens,1,statisch}$ wird auf dem Speicherplatz k seiner Meßwertfolge abgelegt. Befindet sich die vom Sensor vermessene Schablonenstelle unter der Optik - es sind dann weitere $N_{um} \cdot \Gamma/(2 \cdot \pi)=N_{\Gamma}$ Impulse vergangen - dann wird dieser Wert behoben, um den dann gültigen Schwingungsanteil korrigiert und schließlich der Optik als radialer Stellwert aufgeprägt. Dieser Sachverhalt wird mit der schon früher benützten Symbolik folgendermaßen beschrieben

$$\Delta s_{opt}(k+N_{\Gamma})= \qquad (49)$$

$$=\Delta s_{sens,1,statisch}(k)-c_{dyn}.\sin\left(n.\frac{k}{N_{um}}2.\pi+\Phi\right).\cos\left(\frac{\kappa}{\omega}.\frac{k+N_{\Gamma}}{N_{um}}2.\pi+\theta\right)$$

Für die Berechnung der Musterverlagerung in Umfangsrichtung ist es wichtig zu wissen, ob es eine Mantelerzeugende gibt, die nirgendwo eine Verlagerung in Umfangsrichtung erfährt. In Abbildung 3 ist eine kreiszylindrische Schablone gezeigt, die in Form eines Ovals schwingt. Bei allen schwingenden Körpern sind bei kleinen Schwingungsausschlägen die Amplituden in beiden aus der Gleichgewichtslage herausführenden Richtungen gleich groß.

Aus einer einfachen geometrischen Abschätzung der Bogenlängen zwischen den Schwingungsknoten folgt dann, daß

- erstens der Schwingungsknoten eine Auslenkung in Umfangsrichtung erfahren muß, die gleich groß ist wie die Auslenkung der Schwingungsbäuche in der Richtung normal zur Membranflache und daß

- zweitens aus Symmetriegründen die Verlagerung der Schwingungsbäuche der Membran in Umfangsrichtung verschwindet.

Eine Mantelerzeugende der Schablone durch einen Schwingungsbauch (parallel zur Achse) zeigt also das gesuchte Verhalten. Wegen der Zufälligkeit der Wahl der Nullmarke kann man dieses Verhalten von der Mantelerzeugenden an dieser Stelle nicht erwarten, es könnte ja die Nullmarke gerade an der Stelle eines Schwingungsknotens liegen.

Die Berechnung der Verlagerung soll daher von einem solchen Schwingungsbauch ausgehen. Ein zur Nullmarke benachbarter Bauch muß dort liegen, wo die Ortsfunktion $\sin(2 \cdot n \cdot k \cdot \pi/N_{um}+\Phi)$ in (23) den Wert 1 annimmt. Es folgt

$$n.\frac{k_B}{N_{um}}2.\pi+\Phi=\frac{\pi}{2} \qquad (50)$$

und damit wird die der Bauchlage entsprechende Impulszahl $k_B$(=Impulszahl von der Nullmarke bis zur ersten Bauchlage)

$$k_B=\left(\frac{\pi}{2}-\Phi\right)\frac{N_{um}}{2.n.\pi} \qquad (51)$$

Der nächste Berechnungsschritt besteht darin, die Umfangsteillängen db(k) der Schablone zwischen jeweils zwei Meßpunkten zu ermitteln und diese von der Lage des Schwingungsbauchs ausgehend bis zur Gravurstelle zu summieren, um die Bogenlänge dieses Teilumfangs der Schablone zu erhalten. Mit dem Teilumfang muß dann die Differenz zum entsprechenden Teilumfang der idealen Schablone gebildet werden, und diese ist die Verlagerung der Schablonenwand in Umfangsrichtung. Die Teillängen db(k) sind, wie schon früher, aus radialen und tangentiellen Teilstücken geometrisch zusammenzusetzen. Die radialen Teilstücke bestehen hier aus einem statischen und einem dynamischen Fehleranteil. Man erhält für den statischen Fehleranteil des radialen Teilstücks (Figur 4)

$$db_{rad,stat}(k)=\Delta s_{sens,1,statisch}(k)-\Delta s_{sens,1,statisch}(k+1) \tag{52}$$

Der dynamische Fehleranteil ist auf die Schwingung zurückzuführen, wobei in die Zeitfunktion ZTF aller Teilstücke für t die Gravurzeit $t_G$ einzusetzen ist.

$$ZTF =\cos(\kappa.t_G+\theta)=\cos\left(\frac{\kappa}{\omega}.\frac{k+N_\Gamma}{N_{um}}.2.\pi+\theta\right) \tag{53}$$

$$db_{rad,dyn}(k)=c_{dyn}.\left[\sin\left(n.\frac{k}{N_{um}}.2.\pi+\Phi\right)-\sin\left(n.\frac{k+1}{N_{um}}.2.\pi+\Phi\right)\right].ZTF \tag{54}$$

$$\cong -c_{dyn}.n.\frac{2.\pi}{N_{um}}.\cos\left(n.\frac{k}{N_{um}}.2.\pi+\Phi\right).ZTF$$

Für das tangentielle Teilstück erhält man

$$db_{tan}\left(k\right)=(R_0+\frac{\Delta s_{sens,1,statisch}(k)+\Delta s_{sens,1,statisch}(k+1)}{2}).\frac{2.\pi}{N_{um}} \tag{55}$$

Die geometrisch zusammengefügte Teillänge wird

$$db(k)=\sqrt{[db_{tan}(k)]^2+[db_{rad,stat}(k)+db_{rad,dyn}(k)]^2} \tag{56}$$

Die Summierung dieser Teillängen wird am besten zunächst für einen vollen Umfang ausgeführt, um einen schon früher gebrauchten Korrekturfaktor $K_{korr}$ ermitteln zu können. Dieser soll auch hier Wirkungen wie die der Sensorverlagerung oder den Polygonaleffekt ausgleichen.
Es wird

$$K_{korr}=\frac{\sum_{k=k_B}^{N_{um}+k_B} db(k)}{2.\pi.R_0} \tag{57}$$

Es folgt nun weiter für die Bogenlängen des Teilumfangs der realen Schablone

$$Umf_{ist}(k)=\sum_{i=k_B}^{i=k_B+k} db(i) \tag{58}$$

und für die Bogenlänge des Teilumfangs der idealen Schablone

$$Umf_{soll}(k)=2.\pi.\frac{k-k_B}{N_{um}}.R_0 \tag{59}$$

Hieraus kann endlich die Umfangsverlagerung des Musterbilds an der Stelle des k-ten Impulses, aber zur Zeit der Abgabe des $(k+N_\Gamma)$-ten Impulses an der Gravurstelle bestimmt werden. Es wird

$$\Delta t_{opt}(k+N_\Gamma)=Umf_{soll}(k)-K_{korr}\cdot Umf_{ist}(k) \tag{60}$$

Der Rechenaufwand für die Ermittlung der Korrekturen $\Delta s_{opt}$ und $\Delta t_{opt}$ erscheint komplex. Die Komplexität der Rechnung ist aber nur für die Erstellung des Programms von Interesse. Der laufend notwendige Rechenaufwand fällt stärker ins Gewicht und es ist abzuwägen, ob der Aufwand für eine gegebene Rechnerleistung akzeptabel ist. Hierbei ist zu bedenken, daß über Längenabschnitte der Schablone in der Großenordnung von etwa 10 mm nur sehr geringfügige Unterschied in der Große der Schwingungsamplitude zu beobachten sind, und daß die einmal berechneten Verlagerungen $\Delta s_{opt}$ und $\Delta t_{opt}$ innerhalb dieser Längenabschnitte für alle Reihen gelten. Die Schwingungsform, d. h. die Ordnung n der Schwingung, bleibt sogar über die ganze Länge der Schablone bewahrt und ändert sich nur, wenn die Erregerfrequenz (Drehzahl) wechselt. Setzt man voraus, daß die Breite einer Gravurlinie höchstens 100 μm beträgt, dann muß der beschriebene Rechnungsgang nur einmal für etwa 100 Umdrehungen der Schablone ausgeführt werden; ein Aufwand, der vertretbar ist.

Eine erfindungsgemäße Vorrichtung zur Durchführung des vorstehend beschriebenen Verfahrens ist in Figur 5 gezeigt. Die Siebdruckschablone trägt das Bezugszeichen 1, während der Hohlzylinder mit dem Bezugszeichen 1a versehen ist. Auf ihm befindet sich ein Schablonenmuster 1b, und zwar innerhalb einer Lackschicht 1c, die auf der äußeren Umfangsoberfläche des Hohlzylinders 1a liegt. Der Hohlzylinder 1a ist in diesem Fall z. B. ein gleichmäßig perforierter Nickelzylinder.

Die Siebdruckschablone 1 wird an ihren einander gegenüberliegenden Stirnseiten durch jeweils einen Spannkopf 2 bzw. 3 gehalten, die als Zentrierflansche ausgebildet sind. Diese Spannköpfe 2, 3 sind jeweils in einer Lagerschale 4, 5 drehbar gelagert. Die Lagerschalen 4, 5 stützen sich auf einem Maschinenbett 6 ab, und zwar über Stützeinrichtungen 7, 8.

Die Stützeinrichtung 8 kann vom Maschinenbett 6 abgenommen oder relativ zu diesem in Längsrichtung des Siebdruckzylinders verschoben werden, damit dieser leichter zwischen den Spannköpfen 2, 3 positioniert oder aus dem zwischen ihnen liegenden Bereich wieder herausgenommen werden kann.

Ein mit dem linken Spannkopf 2 verbundener Hohlwellenabschnitt 9 erstreckt sich in die Lagerschale 4 und ist dort drehbar gelagert. Dieser Hohlwellenabschnitt 9 wird über einen Antriebsstrang in Drehung versetzt, der durch die Stützeinrichtung 7 hindurchläuft bis zu einem Antriebsmotor, der im Maschinenbett angeordnet ist. Bei Drehung des Hohlwellenabschnitts 9 wird durch ihn der Spannkopf 2 mitgenommen, so daß die Siebdruckschablone 1 dadurch in Drehung versetzt wird. Der andere Spannkopf 3 läuft frei um und ist über einen Hohlwellenabschnitt 10 in der Lagerschale 5 gelagert.

Beide Hohlwellenabschnitte 9 und 10 enden im Bereich der Spannköpfe 2 bzw. 3, erstrecken sich also nicht In die Siebdruckschablone 1 hinein, und sind ferner an ihren den Spannköpfen 2, 3 abgewandten Enden dicht mit Strömungskanälen 11 und 12 verbunden.

Ein mit dem freien Ende des Hohlwellenabschnitts 9 verbundener Drehwinkelgeber 13 informiert über eine Steuerleitung 14 einen Rechner 15 mit zugehörigem Monitor 16 über die jeweilige Drehlage der Siebdruckschablone 1. Dabei gibt der Rechner 15 entsprechende Ein- bzw. Ausschaltimpulse an einen Laser 17 über eine Steuerleitung 18. Ein Laserstrahl 19 des Lasers 17 wird entsprechend dieser Ein- bzw. Ausschaltimpulse emittiert oder nicht emittiert. Über einen ersten Umlenkspiegel 20 wird der Laserstrahl 19 einem zweiten Umlenkspiegel 21 zugeleitet, der gemeinsam mit einer Fokussierungslinse 22 auf einem Optikschlitten 23 montiert ist, der bewegbar auf einem Verstellschlitten 23a angeordnet ist. Der Verstellschlitten 23a stützt sich, wie noch erläutert wird, indirekt am Maschinenbett 6 ab, das beispielsweise auf dem Boden steht, ebenso wie ein Ständer 24 zur Halterung des ersten Umlenkspiegels 20.

Im Bereich zwischen dem ersten Umlenkspiegel 20 und dem zweiten Umlenkspiegel 21 verläuft der Laserstrahl 19 parallel zur Zylinderachse 25 der Siebdruckschablone 1 und wird durch den zweiten Umlenkspiegel 21 so abgelenkt, daß er wenigstens annähernd radial auf den Hohlzylinder 1a zuläuft. Dabei wird er durch die Fokussierungslinse 22 auf die Lackschicht 1c fokussiert.

Der Verstellschlitten 23a ist parallel zur Zylinderachse 25 der Siebdruckschablone 1 verschiebbar. Diese Verschiebung wird durch eine Spindel 26 und einen diese Spindel antreibenden Motor 27 bewirkt. Eine Rundführung 28 und eine Prismenführung 29 sorgen für eine zur Zylinderachse 25 der Siebdruckschablone 1 genau parallele Bewegung des Verstellschlittens 23. Dabei befindet sich die Prismenführung 29 auf der oberen Fläche des Maschinenbetts 6, während die Spindel 26 und die Rundführung 28 an der Vorderseite des Maschinenbetts 6 parallel zueinander angeordnet sind.

Innerhalb des Maschinenbetts 6 befinden sich Gasfördereinrichtungen, von denen jeweils eine mit einem der Strömungskanäle 11 und 12 verbunden ist. Durch diese Gasfördereinrichtungen läßt sich ein Druckgas über die Strömungskanäle 11, 12, die Hohlwellenabschnitte 9, 10 und die Spannköpfe 2, 3 ins Innere der Siebdruckschablone 1 blasen. Mit dem Gas kann auch ein Abdichtmittel ins Innere des Siebdruckzylinders 1 hineingeblasen werden, um von der Lackschicht 1c befreite Öffnungen im Hohlzylinder 1a von innen abzudichten, falls erforderlich. Bei dem Abdichtmittel kann es sich z. B. um Materialschnitzel, beispielsweise Papierschnitzel, bder Kunststoffscheibchen, und dergleichen, handeln, die auch eine reflektierende Oberfläche aufweisen können.

Der Motor 27 zum Antrieb der Spindel 26 ist vorzugsweise ein Schrittmotor, so daß sich durch die Ansteuerimpulse für den Schrittmotor 27 auch die Axialposition des auf den Hohlzylinder 1a auftreffenden Laserstrahls 19 bestimmen läßt. Entsprechende Ansteuerimpulse empfängt der Schrittmotor 27 vom Rechner 15 über eine Leitung 27a.

Mit dem Verstellschlitten 23a ist z. B. einstückig ein Bügel 30 verbunden, der unterhalb der Siebdruckschablone 1 zu liegen kommt und diese im Abstand z. B. teil- bzw. halbkreisförmig umgibt. Der Bügel 30 wird somit bei Bewegung des Schlittens 23a parallel zur Zylinderachse 25 entsprechend mitbewegt. Am Bügel 30 befestigt bzw. in diesen eingelassen sind ein oder mehrere Abstandssensoren 31, die radial zur Siebdruckschablone 1 ausgerichtet den Abstand zwischen ihnen und der Oberfläche der Siebdruckschablone 1 bzw. dem Hohlzylinder 1a messen. Die Abstandsmeßsignale gelangen über eine Leitung 32 zum Rechner 15. Der Bügel 30 kann z. B. drei Abstandssensoren 30 tragen, die an verschiedenen Umfangspositionen der Siebdruckschablone 1 liegen. Durch diese Abstandssensoren 30 werden an jeweils festen Meßpositionen radiale Abweichungen der tatsächlichen Lage der Wand des Hohlzylinders 1a von deren idealen Lage für eine Vielzahl von Umfangspositionen des Hohlzylinders 1a gemessen, wenn sich dieser dreht. Die jeweiligen Meßsignale werden dann im Rechner 15 verarbeitet, um aus den gemessenen Abständen zwischen Sensor und Hohlzylinderoberfläche die radialen Lageabweichungen zu ermitteln. Hieraus werden die bereits eingangs genannten ersten und zweiten Stellsignale gewonnen, von denen das erste dazu verwendet werden kann, die Musterinformation früher oder später aus einer nicht dargestellten Speichereinrichtung abzurufen, die sich ebenfalls im Rechner 15 befindet. Dadurch lassen sich die tangentialen Verschiebungen der Hohlzylinderwand ausgleichen. Durch die zweiten Stellsignale wird der Fokus des Laserstrahls ständig im Bereich der Lackschicht 1c gehalten, was durch entsprechende Verschiebung des Optikschlittens 23 erfolgen kann, der relativ zum Verstellschlitten 23a sowie in Radialrichtung der Siebdruckschablone 1 verschiebbar ist. Das Verschiebesignal zur Verschiebung des Optikschlittens 23 wird diesem über eine Leitung 33 vom Rechner 15 zugeführt.

Leider sind dünnwandige Siebdruckschablonen keine idealen kreiszylindrischen Körper. Sie weisen sowohl in ihrer Längserstreckung als auch in ihrem Querschnitt Abweichungen von der Idealform des Kreiszylinders auf, welche eine passgenaue Musteraufbringung behindern und erfordern, daß diese Abweichungen z. B. durch Messen und Einleitung geeigneter Korrekturmaßnahmen in ihren Auswirkungen unschädlich gemacht werden.

Die Figuren 6 und 7 zeigen eine Siebdruckschablone 1 von nicht idealer, kreiszylindrischer Form. Figur 6 zeigt einen typischen Querschnittsverlauf und Figur 7 zeigt die Abweichungen im Längsschnitt der Siebdruckschablone 1. Die Rundlaufabweichungen 34 der Siebdruckschablone 1 sind im Vergleich zu einem idealen Kreis 35 dargestellt, wobei diese Abweichungen im Verhältnis zu den in der Praxis vorkommenden Fehlern aus Gründen der Deutlichkeit etwas größer gezeichnet wurden. Für die Messung dieser Rundlaufabweichungen 34 sind drei Sensoren 31a, 31b, 31c vorgesehen. Solche Sensoren sind bekannt und können auf der Basis induktiver, kapazitiver bder optischer Effekte die Abstandsänderungen von einem Bezugspunkt feststellen. Sie sind alle aufdie Zylinderachse 25 ausgerichtet.

Die Rundlaufabweichungen 34 haben, wie eingangs bereits erläutert, mehrere Ursachen. Zunächst gibt es statische Formabweichungen. Unter diesem Begriff werden die schon erwähnten Abweichungen von der genauen Kreiszylinderform verstanden, die bereits bei einer in Ruhe befindlichen Schablone beobachtet werden können. Diese sind z. B. bei einer galvanisch hergestellten dünnwandigen Nickelschablone auf innere Materialspannungen zurückzuführen, die während des Herstellprozesses einer solchen Schablone mehr oder weniger zufällig auftreten. Bei diesen statischen Formabweichungen kann man Abweichungen des Querschnitts von der Kreisform 35 und Abweichungen der realen Schablonenachse 25a von ihrer idealen geraden Erstreckung 25 unterscheiden. Diese letztgenannte Formabweichung ergibt bei einem Querschnitt, der genau kreisförmig ist, eine Rundlaufabweichung 34 zufolge einer Exzentrizität des Kreismittelpunkts. Neben den statischen Formabweichungen gibt es dynamisch bedingte, also solche, die durch Schwingungen der dünnen Schablonenwand verursacht werden.

Um alle diese Rundheitsabweichungen zu erfassen, werden die drei Abstandssensoren 31a, 31b, 31c verwendet, und diese werden außerdem in zwei unterschiedlichen Winkelabständen $\alpha$ und $\gamma$ zueinander angeordnet, wobei gilt $\alpha + \gamma = \beta$. Dies ist für die Trennung der Signale in statische und dynamische Anteile sehr voreilhaft. Die Sensoren 31a, 31b, 31c werden in einer solchen Einbaulage vorgesehen, in welcher sie durch andere Bauteile nicht mehr beeinflußt werden, also ferromagnetische Baustoffe werden beispielsweise nicht in der Umgebung des aktiven Endes eines induktiven Sensors vorgesehen. Vorzugsweise werden die Sensoren in der unteren Querschnittshälfte der Schablone 1 unmittelbar an die Gravurstelle 36 anschließend angeordnet. Die Sensoren sind in dem steifen, nicht schwingungsanfälligen Bügel 30 gehalten, der fest mit dem Verstellschlitten 23a verbunden ist. Dieser Verstellschlitten 23a trägt einen Optikschlitten 23, und dieser wiederum trägt die Linse 22 in einer Linsenfassung 22a. Die Rundlaufabweichungen 34 können nicht nur gemessen und mittels der Optik in Übereinstimmung mit dem Meßergebnis nachgeführt werden, sondern die Rundlaufabweichungen 34 können auch von vornherein klein gehalten werden. Zu diesem Zweck wird Luft mit geringem Überdruck in das Innere der Schablone 1 von deren Stirnseiten her eingeblasen. Durch die entstehenden Membranspannungen im Schablonenmantel wird dieser weitgehend kreisrund ausgespannt. Da die verbleibenden Rundheitsabweichungen durch diese Maßnahme klein bis sehr klein werden, kann auch der Meßbereich für die Sensoren 31a, 31b, 31c klein gewählt werden und man erhält ein noch genaueres Meßergebnis als dies ohne Druckbeaufschlagung der Innenseite der Schablone der Fall wäre.

In an die Messung der Rundlaufabweichung anschließenden Prozeßschritten werden die während einer Umdrehung gewonnenen Meßsignale der drei Sensoren 31a, 31b, 31c in ihre der statischen und der dynamischen Formabwelchung zuzuordnenden Anteile zerlegt. Aus diesen Anteilen werden z. B. mit Hilfe der FFT (Fast Fourier Transformation) die Koeffizienten erster Ordnung gewonnen und aus diesen Gliedern die Stellsignale für den Fokusfleck abgeleitet. Da erfahrensgemäß die Schwingungen der Schablonenwand, besonders wenn diese unter einem wenn auch nur geringen inneren Überdruck steht, kleine bis sehr kleine Amplituden aufweisen, können die aus der FFT gewonnenen Stellsignale für mehrere aufeinanderfolgende Umdrehungen der Schablone Verwendung finden. Gegebenenfalls ist es möglich, die FFT dadurch zu umgehen, daß man aus den analogen Meßsignalen unmittelbar nach den Sensoren durch eine RC-Filterung den Signalanteil erster Ordnung gewinnt. In besonderen Fällen, dies heißt bei guter Ausrundung der Schablone durch einen ausreichend hohen Innendruck, kann man auch die ungefilterten Signale anstelle des Signalanteils erster Ordnung verwenden.

Sind die Stellsignale ermittelt, dann wird der Fokus auf verschiedene Weise nachgeführt. Zunächst in radialer Richtung durch radiale Bewegung der Optik, das ist die Linse 22. Sodann in Umfangsrichtung der Schablone 1. Hier ist die günstigste Methode, den Fokusfleck physikalisch stets an der gleichen Stelle zu belassen, dafür aber das Mustersignal über den Rechner etwas früher oder etwas später bereitzustellen, so daß trotz der Verschiebung der Umfangslage der Schablone immer richtig graviert wird. Hat sich also die Wandung der Schablone gegenüber der Soll-Lage etwas vorgeschoben, so werden vom Rechner die Mustersignale an den Laser etwas früher ausgegeben, und umgekehrt.

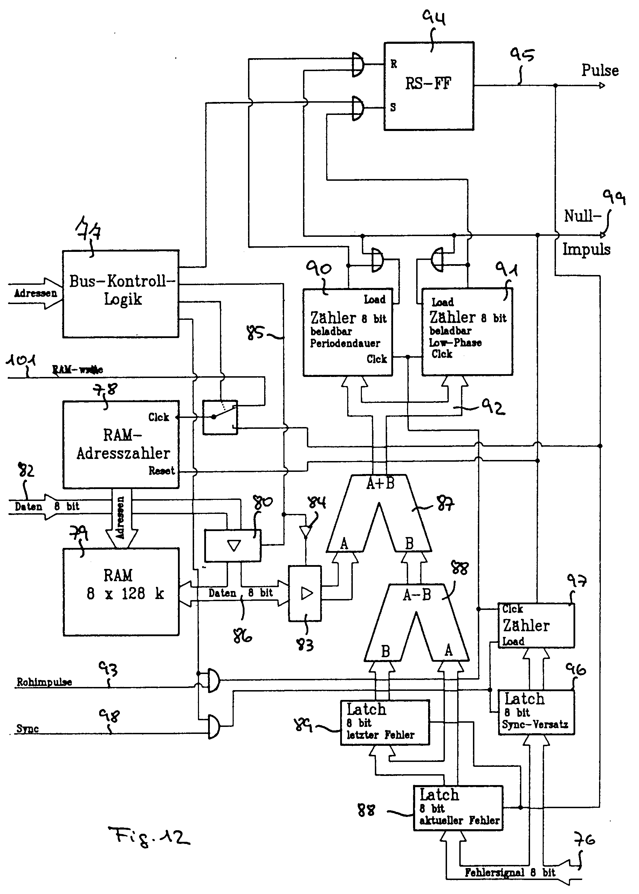

In den Figuren 8 und 9 wird eine Nachführungsmöglichkeit eines optischen Systems 37 gezeigt. Dieses besteht aus der Fokussierlinse 22, die von einer Linsenfassung 22a gehalten wird, und einem beweglichen Umlenkspiegel 38. Die Linsenfassung 22a wird von Blattfedern 39 gehalten, die eine spielfreie Bewegung der Linsenfassung 22a in der Richtung der optischen Achse 40 zulassen, in allen anderen Richtungen die Linsenfassung 22a aber relativ steif abstützen. Die Blattfedern 39 sind in Form von Paketen vorgesehen und man ist durch die Dimensionierung der Blattfedern in der Lage, die Verlagerung der Fokussierlinse 22 und damit des Fokuspunkts in allen zur optischen Achse 40 senkrechten Richtungen innerhalb erforderlicher Toleranzgrenzen zu halten. Ein Stellmotor 41 sorgt für die Bewegung der Linse 22 und der Linsenfassung 22a in Richtung der optischen Achse 40. Der Stellmotor 41 zeigt im Prinzip den Aufbau einer Tauchspule. Die Kontrolle der Lage der Linse 22 kann entweder durch Messung der an der Spule 42 anliegenden Spannung erfolgen oder durch einen nicht mehr dargestellten, an sich bekannten Abstandssensor, der laufend die Lage der Linse 22 bzw. der fest mit dieser verbundenen Linsenfassung 22a mißt. Im Falle der Messung der Spulenspannung wird die Lage durch die mit steigender Spannung größer werdende Spulenkraft bestimmt, die die Blattfedern 39 dann immer stärker durchbiegt. Auch kann eine weitere Feder, z. B. eine vorgespannte Schraubenfeder, als ein die Gegenkraft verstärkendes Element vorgesehen werden, damit der Arbeitspunkt der Einrichtung möglichst nahe der Strecklage der Blattfedern 39 gehalten werden kann und auch die Schwingungsneigung der Anordnung durch die Erhöhung der Federkonstanten klein gehalten werden kann. Die Kontrolle der Verlagerung des Fokuspunkts in Umfangsrichtung der Schablone 1 erfolgt durch den Umlenkspiegel 38, der auf zwei Präzisionskugellagern 43 abgestützt ist. Die Drehachse dieser Lager 43 stimmt mit der Strahlachse des vom Laser 17 emittierten Strahls 19 überein. Durch eine Verschwenkung des Umlenkspiegels 38 kann der durch die Linse 22 gelenkte Strahl in seiner Richtung verändert und der Fokuspunkt auf der Schablone 1 dadurch verlagert werden. Die Schwenkbewegung wird hier durch ein piezoelektrisches Stellelement 44 eingeleitet, das mit seinem oberen Ende über eine Blattfeder 45 an einem Hebel 46 des Umlenkspiegel 38 angreift und bei Längenänderungen des Stellelements 44 den Umlenkspiegel 38 verschwenkt. Der Umlenkspiegel 38 ist über einen Lagerbolzen 47 und einen Lagerbock 48 auf dem Verstellschlitten 23a abgestützt. Das feste untere Ende des Piezostellers 44 ist mit dem Verstellschlitten 23a steif verbunden. Dieser Verstellschlitten 23a wird auf Rundführungen 49 parallel zur Schablonenachse 25 bewegt.

Die Figuren 10 und 11 zeigen eine gleichartige Einrichtung, bei welcher der Umlenkspiegel 38 jedoch nicht von Kugellagern getragen wird sondern von Kreuzfedern 50. Diese Lagerung zeichnet sich durch absolute Spielfreiheit und sehr großer Genauigkeit aus. Hier ist der Stellmotor 41 aber durch ein weiteres piezoelektrisches Stellelement 44a mit Blattfeder 45a ersetzt. Es gelten im übrigen die gleichen Bezeichnungen wie in den Figuren 8 und 9.

In Figur 12 ist die Schaltung dargestellt, welche eine Verlagerung der Musterinformation entsprechend dem eingehenden ersten Stellsignal 76 bewirkt. Eine Buskontroll-Logik 77 steuert das erste richtige Setzen eines Adresszählers 78, der auch in der weiteren Folge das Setzen der richtigen Adresse eines RAM's 79 kontrolliert. Dieser RAM 79 wird über einen 8 bit breiten Datenbus 82 und einen schaltbaren Treiber 80 mit dem einen Datensatz geladen, der die Folge der Längen der auf die Schablone aufzubringenden Musterpunktintervalle enthält. Diese sind nicht alle gleich lang, da jede beliebige Anzahl von Musterpunkten auf den Umfang der Schablone aufgebracht werden können soll, und dies ist nur durch eine vorgewählte Folge geringfügig unterschiedlicher Intervall-Längen möglich. Der Treiber 80 kann über eine Signalleitung 85 geöffnet oder gesperrt werden und zu den gleichen Zeitpunkten wird ein weiterer Treiber 83, der über einen Inverter 84 an die gleiche Signalleitung 85 geschlossen ist, gesperrt oder geöffnet. Dies heißt nichts anderes, als daß der RAM 79 zu einem Zeitpunkt entweder nur beladen oder nur ausgelesen werden kann. Ist der Treiber 83 geöffnet, dann ist der Treiber 80 gesperrt und umgekehrt.

Die Intervall-Länge wird aus dem RAM 79 über einen Datenbus 86 und den Treiber 83 an den Eingang A eines Addierglieds 87 geleitet. Der Eingang B dieses Addierglieds 87 erhält ein Differenzsignal aus dem Subtrahierglied 88, das folgendermaßen gebildet wird. Von einer Sensormeßeinrichtung entsprechend Figur 2 werden digitalisierte Fehlersignale über den Datenbus 76 einem ersten Speicherelement 88 zugeleitet. Dieses Speicherelement 88 speichert bei jedem von der gesamten Einheit abgegebenen Impuls das gerade anstehende Signal und leitet das in der vorhergehenden Periode gespeicherte Fehlersignal einem zweiten Speicherelement 89 zu, dessen Ausgang auf den Eingang B des Subtrahierglieds 88 führt. Auf diese Weise ermittelt das Subtrahierglied 88 bei jedem Impuls die Differenz zweier aufeinanderfolgender Fehlersignale und führt diese dem Eingang B des Addierglieds 88 zu. Genau um diese Differenz wird nun die Sollintervall-Länge erhöht bzw. vermindert, wenn die Differenz negativ ist. Die auf diese Weise korrigierte Intervall-Länge wird einem Periodendauerzähler 90 übergeben. Zur gleichen Zeit erfolgt eine Übergabe auch an den Low-Phasen-Zähler 91 durch ein hardwaremäßig geshiftetes und dadurch auf den halben Wert gesetztes Signal. Das Hardware-Shiften erfolgt durch einen von 8 auf 7 bit reduzierten Datenbus 92, bei welchem die höherwertigen Leitungen um jeweils ein bit niedriger am Zähler 91 angeschlossen werden und das niederwertigste bit überhaupt nicht angeschlossen ist. Die beiden Zähler 90 und 91 werden nun durch die eingehenden Encoder-Impulse 93 abwärtsgezählt und geben jeder bei Erreichen des Nullstands einen Ausgangsimpuls an das Flip-Flop 94. Der Zähler 90 wirkt auf den R-Eingang des Flip-Flops 94, wodurch dessen Ausgang 95 auf den low-level geht. Der S-Eingang des Flip-Flops 94 wird durch den Zähler 91 etwa in der halben Periodendauer bedient, wodurch der Ausgang des Flip-Flops den high-level annimmt. Auf diese Weise führt der Ausgang 95 ein um das erste Stellsignal korrigiertes Pulssignal, in dessen Takt nunmehr ein nicht mehr dargestellter Speicher für das Gravurmuster ausgelesen werden kann. Der Speicherbaustein 96 und der mit diesem bus-mäßig verbundene Zähler 97 dienen zur Korrektur des Eingangs-Nullsignals 98 und bewirken die Ausgabe eines um das erste Stellsignal korrigierten Ausgangs-Nullimpulses 99. Der RAM-Adress-Zähler 78 wird durch die korrigierten Ausgangsimpulse des Ausgangs 95 gesteuert. Ein von der Bus-Kontroll-Logik 77 gesteuerter digitaler Umschalter erhält nur beim Start der Einheit das erste Zähl-Signal über eine RAM-write-Leitung 101, alle weiteren Zählimpulse sind die bereits korrigierten Ausgangsimpulse der Schaltungsanordnung.

## Patentansprüche

1. Verfahren zur Herstellung einer Siebdruckschablone, bei dem ein dünnwandiger Hohlzylinder (1a), der außen eine Lackschicht (1c) trägt, bei Drehung um seine Zylinderachse (25) mittels eines auf ihn auftreffenden Laserstrahls (19) belichtet wird, dessen Fokus im Bereich der Lackschicht (1c) liegt, und der sich parallel zur Zylinderachse (25) bewegt sowie in Übereinstimmung mit einem gewünschten Schablonenmuster (1b) ein- und ausgeschaltet wird, wobei an wenigstens einer zum Laserstrahl (19) festen Meßposition eine radiale Abweichung ($\Delta s_{sens1}(k)$) der tatsächlichen Lage der Wand des Hohlzylinders (1a) von deren idealen Lage für eine Vielzahl von Umfangspositionen des Hohlzylinders (1a) berührungslos ermittelt wird, **dadurch gekennzeichnet**, daß aus wenigstens einer der an der Meßposition erhaltenen radialen Lageabweichungen ($\Delta s_{sens1}(k)$) ein erstes Stellsignal ($\Delta t_{opt}\langle k+N_\Gamma\rangle$) gewonnen wird, um das Schablonenmuster (1b) zwecks Kompensation einer tangentialen Abweichung der Hohlzylinderwand von ihrer idealen Lage in Umfangsrichtung des Hohlzylinders (1a) zu verlagern.

2. Verfahren nach Anspruch 1, **dadurch gekennzeichnet**, daß wenigstens aus der radialen Lageabweichung ($\Delta s_{sens1}(k)$) an der Meßposition ein zweites Stellsignal ($\Delta s_{opt}\langle k+N_\Gamma\rangle$) gewonnen wird, um den Fokus des Laserstrahls (19) in Radialrichtung zu verstellen, nachdem sich der Hohlzylinder (1a) über eine dem Winkelabstand zwischen der Meßposition und dem Laserstrahl entsprechenden Umfangsabschnitt gedreht hat, um diese radiale Lageabweichung zu kompensieren.

3. Verfahren nach Anspruch 1, **dadurch gekennzeichnet,** daß als erstes Stellsignal ($\Delta t_{opt}\langle k+N_\Gamma\rangle$) ein dem zweiten Stellsignal entsprechendes Signal ($\Delta s_{sens1}\langle k-N_{um}/4\rangle$) verwendet wird, das jedoch um eine Viertel Umdrehung phasenverschoben ermittelt wurde.

4. Verfahren nach Anspruch 1 oder 2, **dadurch gekennzeichnet**, daß das erste Stellsignal ($\Delta t_{opt}\langle k+N_\Gamma\rangle$) aus einer Vielzahl von an einer einzigen Meßposition ermittelten radialen Lageabweichungen gewonnen wird.

5. Verfahren nach Anspruch 1 oder 2, **dadurch gekennzeichnet,** daß das erste Stellsignal ($\Delta t_{opt}\langle k + N_\Gamma\rangle$) aus radialen Lageabweichungen bestimmt wird, die an wenigstens drei an verschiedenen Umfangsstellen liegenden Meßpositionen gewonnen werden.

6. Verfahren nach Anspruch 5, **dadurch gekennzeichnet,** daß das zweite Stellsignal ($\Delta s_{opt}\langle k + N_\Gamma\rangle$) aus radialen Lageabweichungen bestimmt wird, die an wenigstens drei an verschiedenen Umfangsstellen liegenden Meßpositionen ermittelt werden.

7. Verfahren nach Anspruch 5 oder 6, **dadurch gekennzeichnet,** daß die Meßpositionen in nur einer Querschnittsebene des Hohlzylinders (1a) liegen.

8. Verfahren nach Anspruch 7, **dadurch gekennzeichnet,** daß der Laserstrahl (19) in dieser Querschnittsebene verläuft.

9. Verfahren nach Anspruch 7 oder 8, **dadurch gekennzeichnet,** daß der Laserstrahl (19) radial auf den Hohlzylinder (1a) gerichtet wird.

10. Verfahren nach einem der Ansprüche 1 bis 9, **dadurch gekennzeichnet,** daß die durch das erste Stellsignal ($\Delta t_{opt}(k + N_{\Gamma})$) über den Laserstrahl (19) aufzubringende Musterinformation früher oder später aus einem Musterinformationsspeicher (15a) abgerufen wird.

11. Verfahren nach einem der Ansprüche 1 bis 9, **dadurch gekennzeichnet,** daß durch das erste Stellsignal ($\Delta t_{opt}(k + N_{\Gamma})$) eine Ablenkeinrichtung (38, 44) angesteuert wird, um den Laserstrahl (19) in Umfangsrichtung des Hohlzylinders (1a) abzulenken.

12. Verfahren nach einem der Ansprüche 1 bis 11, **dadurch gekennzeichnet,** daß im Innern des Hohlzylinders (1a) ein Überdruck erzeugt wird.

13. Vorrichtung zur Herstellung einer Siebdruckschablone, mit einer Lagereinrichtung (2, 4; 3, 5) zur drehbaren Aufnahme eines dünnwandigen Hohlzylinders (1a), der außen eine Lackschicht (1c) trägt; einem parallel zur Zylinderachse (25) des Hohlzylinders (1a) verschiebbaren Schlitten (23a, 23) mit einer Ablenkoptik (21; 38, 44) zur Ablenkung eines Laserstrahls (19) auf die Lackschicht (1c), in deren Bereich der Fokus des Laserstrahls zu liegen kommt; und einer Schalteinrichtung (15) zum Ein- und Ausschalten des Laserstrahls (19) in Übereinstimmung mit einem in einer Speichereinrichtung (15a) gespeicherten Schablonenmuster (1b); wobei am Schlitten (23a) mindestens ein Sensor (31; 31a, 31b, 31c) zur berührungslosen Messung einer radialen Abweichung ($\Delta s_{sens1}(k)$) der tatsächlichen Lage der Wand des Hohlzylinders (1a) von deren idealen Lage angebracht ist, **dadurch gekennzeichnet,** daß Verstellmittel (15; 38, 44) vorhanden sind, die abhängig von der gemessenen Lageabweichung eine tangentiale Verschiebung des Schablonenmusters (1b) durchführen.

14. Vorrichtung nach Anspruch 13, **dadurch gekennzeichnet,** daß die Verstellmittel (15) elektrische Verstellmittel sind, die für einen früheren oder späteren Abruf des Schablonenmusters (1b) aus der Speichereinrichtung (15a) sorgen.

15. Vorrichtung nach Anspruch 13, **dadurch gekennzeichnet,** daß die Verstellmittel elektromechanische Verstellmittel (38, 44) sind, die den auf den Hohlzylinder (1a) auftreffenden Laserstrahl (19) In Umfangsrichtung des Hohlzylinders (1a) ablenken.

16. Vorrichtung nach einem der Ansprüche 13 bis 15, **dadurch gekennzeichnet,** daß weitere Verstellmittel (41, 42) vorhanden sind, um abhängig von der gemessenen radialen Lageabweichung eine Verstellung des Fokus des Laserstrahls (19) in zum Hohlzylinder (1a) radialer Richtung durchzuführen.

17. Vorrichtung nach einem der Ansprüche 13 bis 15, **dadurch gekennzeichnet,** daß am Schlitten (23) drei Abstandssensoren (31a, 31b, 31c) befestigt sind, die verschiedenen Umfangsstellen des Hohlzylinders (1a) gegenüberliegend angeordnet sind.

## Claims

1. Method for producing a screen printing stencil, in which a thin-walled hollow cylinder (1a) bearing a lacquer layer (1c) on the outside is exposed, while rotating about its cylinder axis (25), by means of a laser beam (19) impinging on it, whose focus lies in the region of the lacquer layer (1c) and which is moved parallel to the cylinder axis (25) and is switched on and off in agreement with a desired stencil pattern (1b), wherein at least one measuring position fixed relative to the laser beam (19) a radial deviation ($\Delta s_{sens1}(k)$) of the actual position of the wall of the hollow cylinder (1a) from its ideal position is determined in a contactless manner for a multiplicity of circumferential positions of the hollow cylinder (1a), characterized in that a first actuating signal ($\Delta t_{opt}(k + N_{\Gamma})$) is derived from at least one of the radial positional deviations ($\Delta s_{sens1}(k)$) obtained at the measuring position, in order for the purpose of compensating a tangential deviation of the hollow cylinder wall from its ideal position to displace the stencil pattern (1b) in the circumferential direction of the hollow cylinder (1a).

2. Method according to Claim 1, characterized in that a second actuating signal ($\Delta s_{opt}(k + N_{\Gamma})$) is derived at least from the radial positional deviation ($\Delta s_{sens1}(k)$) at the measuring position, in order to adjust the focus of the laser beam (19) in the radial direction after the hollow cylinder (1a) has rotated over a circumferential section corresponding to the angular distance between the measuring position and the laser beam, in order to compensate this radial positional deviation.

3. Method according to Claim 1, characterized in that use is made as first actuating signal ($\Delta t_{opt} \langle k + N_\Gamma \rangle$) of a signal ($\Delta s_{sens1} \langle k - N_{um}/4 \rangle$) which corresponds to the second actuating signal but which was determined shifted in phase by a quarter revolution.

4. Method according to Claim 1 or 2, characterized in that the first actuating signal ($\Delta t_{opt} \langle k + N_\Gamma \rangle$) is derived from a multiplicity of radial positional deviations determined at a single measuring position.

5. Method according to Claim 1 or 2, characterized in that the first actuating signal ($\Delta t_{opt} \langle k + N_\Gamma \rangle$) is determined from radial positional deviations which are derived at at least three measuring positions situated at different circumferential points.

6. Method according to Claim 5, characterized in that the second actuating signal ($\Delta s_{opt} \langle k + N_\Gamma \rangle$) is determined from radial positional deviations which are determined at at least three measuring positions situated at different circumferential points.

7. Method according to Claim 5 or 6, characterized in that the measuring positions are situated in only one cross-sectional plane of the hollow cylinder (1a).

8. Method according to Claim 7, characterized in that the laser beam (19) extends in this cross-sectional plane.

9. Method according to Claim 7 or 8, characterized in that the laser beam (19) is directed radially onto the hollow cylinder (1a).

10. Method according to one of Claims 1 to 9, characterized in that the pattern information which is to be procured by means of the first actuating signal ($\Delta t_{opt} \langle k + N_\Gamma \rangle$) via the laser beam (19) is retrieved sooner or later from a pattern information memory (15a).

11. Method according to one of Claims 1 to 9, characterized in that a deflecting device (38, 44) is driven via the first actuating signal ($\Delta t_{opt} \langle k + N_\Gamma \rangle$) in order to deflect the laser beam (19) in the circumferential direction of the hollow cylinder (1a).

12. Method according to one of Claims 1 to 11, characterized in that an overpressure is generated in the interior of the hollow cylinder (1a).

13. Device for producing a screen printing stencil, having a bearing device (2, 4; 3, 5) for rotatably accommodating a thin-walled hollow cylinder (1a) bearing a lacquer layer (1c) on the outside; a carriage (23a, 23) which can be displaced parallel to the cylinder axis (25) of the hollow cylinder (1a) and has a deflecting optical system (21; 38, 44) for deflecting a laser beam (19) onto the lacquer layer (1c) in the region of which the focus of the laser beam comes to lie; and a switching device (15) for switching the laser beam (19) on and off in agreement with a stencil pattern (1b) stored in a storage device (15a); wherein at least one sensor (31; 31a, 31b, 31c) for measuring in a contactless manner a radial deviation ($\Delta s_{sens1}(k)$) of the actual position of the wall of the hollow cylinder (1a) from its ideal position is mounted on the carriage (23a); characterized in that adjusting means (15; 38, 44) are present which carry out a tangential displacement of the stencil pattern (1b) as a function of the measured positional deviation.

14. Device according to Claim 13, characterized in that the adjusting means (15) are electrical adjusting means which ensure an earlier or later retrieval of the stencil pattern (1b) from the storage device (15a).

15. Device according to Claim 13, characterized in that the adjusting means are electromechanical adjusting means (38, 44) which deflect the laser beam (19) impinging on the hollow cylinder (1a) in the circumferential direction of the hollow cylinder (1a).

16. Device according to one of Claims 13 to 15, characterized in that further adjusting means (41, 42) are present in order to carry out an adjustment of the focus of the laser beam (19) in the radial direction relative to the hollow cylinder (1a) as a function of the measured radial positional deviation.

17. Device according to one of Claims 13 to 15, characterized in that three ranging sensors (31a, 31b, 31c) which are arranged opposite different circumferential points of the hollow cylinder (1a) are attached to the carriage (23).

**Revendications**

1. Procédé de fabrication d'un écran sérigraphique, dans lequel un cylindre creux (1a) à paroi mince, dont la face extérieure est revêtue d'une couche de vernis (1c) est insolé, pendant la rotation autour de son axe de cylindre (25), par un rayon laser (19) incident, dont le foyer se situe dans la zone de la couche de vernis (1c), lequel rayon laser se déplace parallèlement à l'axe du cylindre (25), et est activé et interrompu en correspondance avec un modèle (1b) souhaité de l'écran sérigraphique, dans lequel on détermine sans contact, en au moins un point de mesure fixe par rapport au rayon laser (19), un écart radial ($\Delta s_{sens1}(k)$) de la position réelle de la paroi du cylindre creux (1a) par rapport à la position idéale pour une pluralité de points situés sur la périphérie du cylindre creux (1a), caractérisé en ce que, au moins à partir de l'un des écarts de position radiale ($\Delta s_{sens1}(k)$) enregistrés au point de mesure, un premier signal de réglage ($\Delta t_{opt}(k + N_G)$) est émis, afin de déplacer le modèle sérigraphique (1b) pour compenser un décalage tangentiel de la paroi du cylindre creux par rapport à sa position idéale dans la direction périphérique du cylindre creux (1a).

2. Procédé selon la revendication 1, caractérisé en ce que, au moins à partir de l'un des écarts de position radiale ($\Delta s_{sens1}(k)$) enregistrés au point de mesure, un deuxième signal de réglage ($\Delta s_{opt}(k + N_G)$) est émis, afin de déplacer le foyer du rayon laser (19) dans le sens radial, après que le cylindre creux (1a) ait exécuté une rotation sur un tronçon périphérique correspondant à la distance angulaire entre le point de mesure et le rayon laser, afin de compenser cet écart de position radiale.

3. Procédé selon la revendication 1, caractérisé en ce que l'on utilise comme premier signal de réglage ($\Delta t_{opt}(k + N_G)$) un signal ($\Delta s_{sens1}(k - N_{um}/4)$) qui correspond au deuxième signal de réglage, qui est toutefois déterminé avec un décalage de phase correspondant à un quart de la rotation.

4. Procédé selon la revendication 1 ou 2, caractérisé en ce que le premier signal de réglage ($\Delta t_{opt}(k + N_G)$) est obtenu à partir d'un grand nombre d'écarts de position radiale enregistrés en un seul point de mesure.

5. Procédé selon la revendication 1 ou 2, caractérisé en ce que le premier signal de réglage ($\Delta t_{opt}(k + N_G)$) est déterminé à partir des écarts de position radiale, qui ont été captés au moins en trois points de mesure situés en divers points de la périphérie.

6. Procédé selon la revendication 5, caractérisé en ce que le deuxième signal de mesure ($\Delta s_{opt}(k + N_G)$) est déterminé à partir des écarts de position radiale, qui ont été captés au moins en trois points de mesure situés en divers points de la périphérie.

7. Procédé selon la revendication 5 ou 6, caractérisé en ce que les points de mesure sont situés dans un seul plan de la section transversale du cylindre creux (1a).

8. Procédé selon la revendication 7, caractérisé en ce que le rayon laser (19) s'étend dans ce plan de la section transversale.

9. Procédé selon la revendication 7 ou 8, caractérisé en ce que le rayon laser (19) est dirigé radialement sur le cylindre creux (1a).

10. Procédé selon l'une quelconque des revendications 1 à 9, caractérisé en ce que l'information relative au modèle à appliquer par le premier signal de réglage ($\Delta t_{opt}(k + N_G)$) au rayon laser (19), est chargée plus tôt ou plus tard à partir d'une mémoire (15a) dans laquelle est stockée l'information relative au modèle.

11. Procédé selon l'une quelconque des revendications 1 à 9, caractérisé en ce que le premier organe de déviation (38, 44), pour dévier le rayon laser (19) dans la direction périphérique du cylindre creux (1a).

12. Procédé selon l'une des revendications 1 à 11, caractérisé en ce que l'on produit une surpression à l'intérieur du cylindre creux (1a).

13. Dispositif de fabrication d'un écran sérigraphique, comprenant: un organe de support (2, 4; 3, 5) destiné à recevoir à rotation un cylindre creux (1a) à paroi mince, dont la face extérieure est revêtue d'une couche de vernis (1c); un chariot (23a, 23) qui peut être déplacé parallèlement à l'axe de cylindre (25) du cylindre creux (1a), lequel chariot comprend une optique de déviation (21; 38, 44) destiné à dévier un rayon laser (19) sur la couche de vernis (1c), dans la zone de laquelle parvient le foyer du rayon laser; et un organe de commutation (15) pour activer et interrompre le rayon laser (19) en correspondance avec un modèle sérigraphique (1b), stocké dans un organe de mémoire (15a); dans lequel dispositif au moins un capteur (31; 31a, 31b, 31c) est monté sur le chariot (23a) pour déterminer par un processus de mesure sans contact un écart radial ($\Delta s_{sens1}(k)$) de la position réelle de la paroi du cylindre creux (1a) par rapport à la position idéale; caractérisé en ce que sont prévus des moyens de réglage (15; 38, 44), qui commandent un déplacement tangentiel du modèle sérigraphique (1b) en fonction de l'écart de position mesuré.

14. Dispositif selon la revendication 13, caractérisé en ce que les moyens de réglage (15) sont des moyens de réglage électriques qui veillent à avancer ou retarder la lecture du modèle sérigraphique (1b) à partir de l'organe de mémoire (15a).

15. Dispositif selon la revendication 13, caractérisé en ce que les moyens de réglage (38, 44) sont des moyens de réglage électromécaniques, qui dévient, dans la direction périphérique du cylindre creux (1a), le rayon laser (19) incident sur le cylindre creux (1a).

16. Dispositif selon l'une des revendications 13 à 15, caractérisé en ce que d'autres moyens de réglage (41, 42) sont prévus, destinés pour déplacer le foyer du rayon laser (19) dans le sens radial par rapport au cylindre creux (1a), en fonction de l'écart de position radial mesuré.

17. Dispositif selon l'une des revendications 13 à 15, caractérisé en ce que trois capteurs de distance (31a, 31b, 31c) sont fixés contre le chariot (23), lesquels capteurs sont disposés de manière à correspondre à différents points sur la périphérie du cylindre creux (1a).

Fig. 1

Fig. 2

$a_k \cong a$

$b_1 \cong B_1 + a$

$a$

$B_1$

$b_2 \cong B_2 - a$

$B_2$

$a$

k1

k2

Fig. 3

Fig. 4

Fig. 5

Fig. 6

Fig. 7

36  40  22a  22  19  37  38  46

1a

45

44

23

39

39

41

23a

49

49

42

Fig. 8

49  19  49

22a

23a

22

38

36  40

44

23

46

47

43

48

Fig. 9

Fig. 10

Fig. 11

Fig. 12